# EUROPEAN PATENT APPLICATION

(11) **EP 4 750 052 A1**
(43) Date of publication of application: **27.05.2026**
(21) Application number: 24878658.4
(22) Date of filing: 15.08.2024
(51) Int. Cl.: H04N 19/00, H04N 19/50

(54) **VIDEO CODING METHOD AND APPARATUS, STORAGE MEDIUM AND ELECTRONIC DEVICE**

(30) Priority: 19.10.2023 CN 202311372122
(71) Applicant: Tencent Technology (Shenzhen) Company Limited, Shenzhen, Guangdong 518057 (CN)
(72) Inventor: XU, Shishen, Shenzhen, Guangdong 518057 (CN); LENG, Longtao, Shenzhen, Guangdong 518057 (CN)
(74) Representative: Nederlandsch Octrooibureau
(86) International application number: PCT/CN2024/112356
(87) International publication number: WO 2025/082006

(57) **Abstract**

A video coding method, executed by an electronic device, and comprising: when N adjacent blocks of a current block in a current video frame have been coded, and a coding mode of each adjacent block among the N adjacent blocks is different from backward predictive coding, counting a first number of adjacent blocks having undergone forward predictive coding among the N adjacent blocks, wherein N is a positive integer greater than or equal to 2 (S302); when the first number is greater than 0 and forward predictive coding cost of the current block is determined by using a reference frame set and is less than a preset target cost threshold corresponding to the first number, determining coding cost used for backward predictive coding of the current block by using each reference frame in the reference frame set, and determining the minimum coding cost among the determined coding cost used for backward predictive coding as backward predictive coding cost of the current block, wherein the forward predictive coding cost is the minimum coding cost among the coding cost used for forward predictive coding of the current block by using each reference frame in the reference frame set (S304); and on the basis of the size relationship between the forward predictive coding cost and the backward predictive coding cost, determining a coding mode of the current block (S306).

## Description

### RELATED APPLICATION

This application claims priority to Chinese Patent Application No. 2023113721229, filed on October 19, 2023 and entitled "VIDEO CODING METHOD AND APPARATUS, STORAGE MEDIUM, AND ELECTRONIC DEVICE", which is incorporated herein by reference in its entirety.

### FIELD OF THE TECHNOLOGY

This application relates to the computer field, and specifically, to a video coding method and apparatus, a storage medium, and an electronic device.

### BACKGROUND OF THE DISCLOSURE

In a related technology, when coding a video frame, a coder usually needs to attempt different predictive coding modes in a traversing manner, for example, first attempt skip coding, then attempt merge coding, then attempt inter-frame coding, and finally attempt intra-frame coding. Particularly, when attempting inter-frame coding, the coder usually first attempts forward predictive coding, then attempts backward predictive coding, and finally attempts bi-directional predictive coding. After attempting to code the video frame in all predictive coding modes, the coder selects a coding mode with a lowest coding cost as a final coding mode for coding the video frame.

In this way, when attempting to perform backward predictive coding, the coder usually needs to traverse all available reference frames. For example, backward reference frames used for a parent block, a sub-block, a left neighboring block, an upper neighboring block, an upper left neighboring block, and a current optimal mode (for example, merge coding or skip coding) are used as candidate reference frames for backward predictive coding of a current block. Required time is usually long. In addition, when backward predictive coding is attempted, there is a 54.21% probability that an existing algorithm encounters a worst case, to be specific, all available reference frames need to be traversed. However, a probability of finally selecting forward predictive coding from all predictive coding modes (for example, forward predictive coding, backward predictive coding, and bi-directional predictive coding) is 87.27%. The coder wastes much time when attempting backward predictive coding, while forward predictive coding is finally selected to code the video frame. There is almost no gain in a compression rate. Consequently, video coding efficiency is low.

For the foregoing problem of low video coding efficiency, no effective solution has been provided at present.

### SUMMARY

This application provides a video coding method and apparatus, a storage medium, and an electronic device.

According to an aspect of the embodiments of this application, a video coding method is performed by an electronic device, and the method including:
when N neighboring blocks of a current block in a current video frame have been coded, and a coding mode of each of the N neighboring blocks is different from backward predictive coding, collecting statistics on a first quantity of neighboring blocks on which forward predictive coding is performed in the N neighboring blocks, N being a positive integer greater than or equal to 2;
when the first quantity is greater than 0, a forward predictive coding cost of the current block is determined by using a reference frame set, and the forward predictive coding cost of the current block is less than a preset target cost threshold corresponding to the first quantity, determining coding costs used for separately performing backward predictive coding on the current block by using all reference frames in the reference frame set, and determining a lowest coding cost in the determined coding costs used for performing backward predictive coding as a backward predictive coding cost of the current block, the forward predictive coding cost being a lowest coding cost in coding costs used for separately performing forward predictive coding on the current block by using all the reference frames in the reference frame set; and
determining a coding mode of the current block based on a magnitude relationship between the forward predictive coding cost and the backward predictive coding cost.

According to another aspect of the embodiments of this application, a video coding apparatus is further provided, including:
a forward predictive coding neighboring block statistical unit, configured to: when N neighboring blocks of a current block in a current video frame have been coded, and a coding mode of each of the N neighboring blocks is different from backward predictive coding, collect statistics on a first quantity of neighboring blocks on which forward predictive coding is performed in the N neighboring blocks, N being a positive integer greater than or equal to 2;
a backward predictive coding cost determining unit, configured to: when the first quantity is greater than 0, a forward predictive coding cost of the current block is determined by using a reference frame set, and the forward predictive coding cost of the current block is less than a preset target cost threshold corresponding to the first quantity, determine coding costs used for separately performing backward predictive coding on the current block by using all reference frames in the reference frame set, and determine a lowest coding cost in the determined coding costs used for performing backward predictive coding as a backward predictive coding cost of the current block, the forward predictive coding cost being a lowest coding cost in coding costs used for separately performing forward predictive coding on the current block by using all the reference frames in the reference frame set; and
a first coding mode determining unit, configured to determine a coding mode of the current block based on a magnitude relationship between the forward predictive coding cost and the backward predictive coding cost.

A video coding method, performed by an electronic device, and including:
when N neighboring blocks of a current block in a current video frame have been coded, and a coding mode of each of the N neighboring blocks is different from forward predictive coding, determining a second quantity of neighboring blocks on which backward predictive coding is performed in the N neighboring blocks, N being a positive integer greater than or equal to 2;
when the second quantity is greater than 0, a backward predictive coding cost of the current block is determined by using a reference frame set, and the backward predictive coding cost of the current block is less than a preset target cost threshold corresponding to the second quantity, determining coding costs used for separately performing forward predictive coding on the current block by using all reference frames in the reference frame set, and determining a lowest coding cost in the determined coding costs used for performing forward predictive coding as a forward predictive coding cost of the current block, the backward predictive coding cost being a lowest coding cost in coding costs used for separately performing backward predictive coding on the current block by using all the reference frames in the reference frame set; and
determining a coding mode of the current block based on a magnitude relationship between the backward predictive coding cost and the forward predictive coding cost.

A video coding apparatus, the apparatus including:
a backward predictive coding neighboring block statistical unit, configured to: when N neighboring blocks of a current block in a current video frame have been coded, and a coding mode of each of the N neighboring blocks is different from forward predictive coding, determine a second quantity of neighboring blocks on which backward predictive coding is performed in the N neighboring blocks, N being a positive integer greater than or equal to 2;
a forward predictive coding cost determining unit, configured to: when the second quantity is greater than 0, a backward predictive coding cost of the current block is determined by using a reference frame set, and the backward predictive coding cost of the current block is less than a preset target cost threshold corresponding to the second quantity, determine coding costs used for separately performing forward predictive coding on the current block by using all reference frames in the reference frame set, and determine a lowest coding cost in the determined coding costs used for performing forward predictive coding as a forward predictive coding cost of the current block, the backward predictive coding cost being a lowest coding cost in coding costs used for separately performing backward predictive coding on the current block by using all the reference frames in the reference frame set; and
a second coding mode determining unit, configured to determine a coding mode of the current block based on a magnitude relationship between the backward predictive coding cost and the forward predictive coding cost.

According to still another aspect of the embodiments of this application, a computer-readable storage medium is further provided, having a computer program stored therein, the computer program being configured for, when run, performing the foregoing video coding method.

According to still another aspect of the embodiments of this application, a computer program product or a computer program is provided, the computer program product or the computer program including computer instructions, and the computer instructions being stored in a computer-readable storage medium. A processor of an electronic device reads the computer instructions from the computer-readable storage medium, and executes the computer instructions, so that the electronic device performs the foregoing video coding method.

According to still another aspect of the embodiments of this application, an electronic device is further provided, including a memory and a processor, the memory having a computer program stored therein, the processor being configured to perform the foregoing video coding method through the computer program.

Details of one or more embodiments of this application are set forth in the following accompanying drawings and descriptions. Other features, objectives, and advantages of this application become clear in the specification, the accompanying drawings, and the claims.

### BRIEF DESCRIPTION OF THE DRAWINGS

To describe technical solutions in embodiments of this application or the conventional technology more clearly, the following briefly describes the accompanying drawings for describing the embodiments or the conventional technology. It is clear that, the accompanying drawings in the following description show only embodiments of this application, and a person of ordinary skill in the art may still derive other drawings from the disclosed accompanying drawings without creative efforts.
FIG. 1 is a schematic diagram 1 of an application scenario of an exemplary video coding method according to an embodiment of this application;
FIG. 2 is a schematic diagram 2 of an application scenario of an exemplary video coding method according to an embodiment of this application;
FIG. 3 is a flowchart of an exemplary video coding method according to an embodiment of this application;
FIG. 4 is a schematic diagram of an exemplary correspondence between a CU size and a CU depth according to an embodiment of this application;
FIG. 5 is a schematic diagram of exemplary coding information according to an embodiment of this application;
FIG. 6 is an exemplary schematic diagram of determining a cost threshold according to an embodiment of this application;
FIG. 7 is an exemplary schematic diagram of accumulation of an accumulated coding cost and a count according to an embodiment of this application;
FIG. 8 is an exemplary schematic diagram 1 of determining statistical coding information and a count set according to an embodiment of this application;
FIG. 9 is an exemplary schematic diagram 2 of determining statistical coding information and a count set according to an embodiment of this application;
FIG. 10 is a schematic diagram of an exemplary flag setting according to an embodiment of this application;
FIG. 11 is a schematic diagram of an exemplary coding mode of a neighboring block according to an embodiment of this application;
FIG. 12 is a schematic diagram of an exemplary reference frame set according to an embodiment of this application;
FIG. 13 is an exemplary schematic diagram of determining a reference frame allowed to be used for performing forward predictive coding on a current block according to an embodiment of this application;
FIG. 14 is an exemplary schematic diagram of determining a coding mode of a current block according to an embodiment of this application;
FIG. 15 is a schematic diagram of an exemplary neighboring block of a current block according to an embodiment of this application;
FIG. 16 is an exemplary schematic diagram of determining a current block according to an embodiment of this application;
FIG. 17 is a schematic diagram of an exemplary video coding method according to an embodiment of this application;
FIG. 18 is an exemplary schematic diagram of determining a forward predictive coding cost and a backward predictive coding cost according to an embodiment of this application;
FIG. 19 is a schematic structural diagram of an exemplary video coding apparatus according to an embodiment of this application;
FIG. 20 is a schematic structural diagram of an exemplary electronic device according to an embodiment of this application; and
FIG. 21 is a structural block diagram of a computer system of an exemplary electronic device according to an embodiment of this application.

### DESCRIPTION OF EMBODIMENTS

The following clearly and completely describes the technical solutions in the embodiments of this application with reference to the accompanying drawings in the embodiments of this application. It is clear that the described embodiments are merely some rather than all of the embodiments of this application. Based on the embodiments of this application, all other embodiments obtained by a person of ordinary skill in the art without creative efforts fall within the protection scope of this application.

**In** the specification, claims, and accompanying drawings of this application, terms "first", "second", and the like are intended to distinguish between similar objects but do not necessarily indicate a specific order or sequence. Data used in such a way is interchangeable in appropriate circumstances, so that the embodiments of this application described herein can be implemented in a sequence other than those illustrated or described herein. In addition, the terms "include", "have", and any variants thereof are intended to cover non-exclusive inclusion. For example, a process, method, system, product, or device including a series of operations or units is not necessarily limited to those clearly listed operations or units, but may include other operations or units that are not clearly listed or are inherent to the process, method, product, or device.

First, nouns that appear in the embodiments of this application are explained as follows:
Concepts of a coding unit, a parent block, a sub-block, and a coding unit depth (cuDepth): For the H.265 standard, a coding tree unit (CTU) whose size is 64x64 may be divided into four 32x32 coding units (CU), each 32x32 CU may be divided into four 16x16 CUs, and each 16x16 CU may be four 8x8 CUs. Assuming that a size of a current CU is 16x16, four 8x8 CUs of the current CU are sub-blocks of the current CU, and for the four 8x8 CUs, the divided 16x16 CU is a parent block of the four 8x8 CUs. CuDepth = 6 - (log2(cu size)), and cuDepths of CUs of 64x64, 32x32, 16x16, and 8x8 are respectively 0, 1, 2, and 3. Herein, cu may have a meaning the same as that of CU.

Intra frame (I frame): is an intra-frame coded frame, includes only an intra-frame predicted macroblock, and is coded by using information about only the frame without reference to another frame.

Predictive frame (P frame): Inter-frame predictive coding is performed by using a previous I frame or P frame in a motion prediction mode.

Bi-directional interpolated prediction frame (B frame): provides the highest compression ratio. Both a previous picture frame (for example, an I frame or a P frame) and a subsequent picture frame (for example, a P frame) are needed to perform inter-frame bi-directional predictive coding in a motion prediction mode.

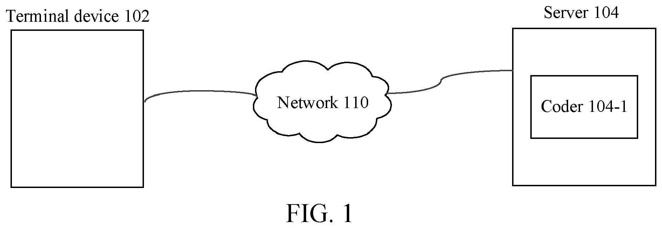

According to an aspect of the embodiments of this application, a video coding method is provided. In an implementation, the video coding method may be applied to, but is not limited to, a hardware environment shown in FIG. 1.

As shown in FIG. 1, a terminal device 102 and a server 104 may communicate with each other over a network, and the terminal device 102 or the server 104 may code a video frame. An example in which the server codes the video frame is used. A coder 104-1 is deployed on the server. In a case that the terminal device 102 needs to code the video frame, the coder 104-1 deployed on the server 104 may code the video frame.

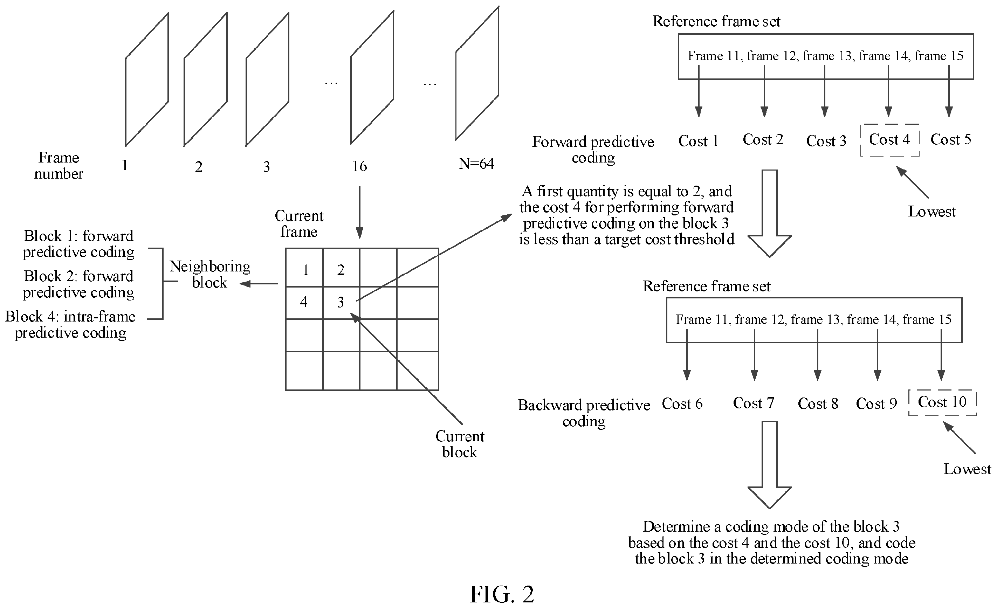

As shown in FIG. 2, a current video may include a plurality of video frames with respective frame numbers, for example, video frames whose frame numbers are 1 to 64. A current video frame may be a to-be-coded video frame in the current video. For example, the current video frame may be a video frame whose frame number is 16. A current block in the current video frame may be a to-be-coded block in the current video frame. For example, the current block is a block 3. Neighboring blocks of the block 3 may include, but are not limited to, a left neighboring block (that is, a block 4) of the block 3, an upper neighboring block (that is, a block 2) of the block 3, an upper left neighboring block (that is, a block 1) of the block 3, a right neighboring block of the block 3, an upper right neighboring block of the block 3, and the like. In other words, neighboring blocks of the block 3 may include, but are not limited to, the block 1, the block 2, and the block 4. In this application, the current block in the current video frame may be coded by using the following operations: In this application, an orientation relative to a block, for example, upper, left, right, upper left, lower left, upper right, or lower right of the block, is determined by using the block as a center when the block or the video frame in which the block is located is front-viewed.

First, when the block 1, the block 2, and the block 4 in the neighboring blocks of the block 3 have been coded, and coding modes of the block 1, the block 2, and the block 4 are different from backward predictive coding, statistics on a first quantity of neighboring blocks on which forward predictive coding is performed in the block 1, the block 2, and the block 4 are collected. In this embodiment, coding modes of both the block 1 and the block 2 are forward predictive coding, and a coding mode of the block 4 is intra-frame predictive coding. The first quantity is 2.

Then, when the first quantity is greater than 0, a forward predictive coding cost of the block 3 is determined by using a reference frame set, and the forward predictive coding cost of the block 3 is less than a preset target cost threshold corresponding to the first quantity, coding costs used for separately performing backward predictive coding on the block 3 by using all reference frames in the reference frame set are determined, and a lowest coding cost in the determined coding costs used for performing backward predictive coding is determined as a backward predictive coding cost of the block 3, the forward predictive coding cost being a lowest coding cost in coding costs used for separately performing forward predictive coding on the block 3 by using all the reference frames in the reference frame set.

In an example, the reference frame set may include but is not limited to a frame 11, a frame 12, a frame 13, a frame 14, and a frame 15. A coding cost used for performing forward predictive coding on the block 3 by using the frame 11 is a cost 1, a coding cost used for performing forward predictive coding on the block 3 by using the frame 12 is a cost 2, a coding cost used for performing forward predictive coding on the block 3 by using the frame 13 is a cost 3, a coding cost used for performing forward predictive coding on the block 3 by using the frame 14 is a cost 4, and a coding cost used for performing forward predictive coding on the block 3 by using the frame 15 is a cost 5. The forward predictive coding cost is the lowest cost 4 in the cost 1, the cost 2, the cost 3, the cost 4, and the cost 5. In an example, a coding cost used for performing backward predictive coding on the block 3 by using the frame 11 is a cost 6, a coding cost used for performing backward predictive coding on the block 3 by using the frame 12 is a cost 7, a coding cost used for performing backward predictive coding on the block 3 by using the frame 13 is a cost 8, a coding cost used for performing backward predictive coding on the block 3 by using the frame 14 is a cost 9, and a coding cost used for performing backward predictive coding on the block 3 by using the frame 15 is a cost 10. The backward predictive coding cost is the lowest cost 10 in the cost 6, the cost 7, the cost 8, the cost 9, and the cost 10.

Then, a coding mode of the block 3 is determined based on the cost 4 and the cost 10.

In this embodiment, only an example in which the neighboring blocks of the block 3 include the left block, the upper left block, and the upper block of the block 3 is used for description. Actually, the neighboring blocks of the block 3 may include but are not limited to the left block, the right block, the upper block, the lower block, the upper left block, the upper right block, the lower left block, the lower right block, and the like of the block 3.

In the foregoing manner, when a plurality of coded neighboring blocks exist in neighboring blocks of the current block, and a coding mode of each neighboring block is different from the backward predictive coding, if a neighboring block on which forward predictive coding has been performed exists in the plurality of coded neighboring blocks of the current block, and the forward predictive coding cost of the current block is less than a cost threshold corresponding to a quantity of neighboring blocks on which forward predictive coding has been performed in the plurality of coded neighboring blocks, the reference frame set used for determining the forward predictive coding cost of the current block is used as a reference frame set for performing backward predictive coding on the current block. In this way, it is avoided that all available reference frames need to be searched for when backward predictive coding is performed on the current block. For example, backward reference frames used for a parent block, a sub-block, a left neighboring block, an upper neighboring block, an upper left neighboring block, and a current optimal mode (for example, merge coding or skip coding) are used as candidate reference frames for backward predictive coding of the current block, thereby reducing time required for determining the reference frame set for performing backward predictive coding on the current block.

In addition, the lowest coding cost in the coding costs used for performing backward predictive coding on the current block by using all the reference frames in the reference frame set may be directly determined as the backward predictive coding cost of the current block, thereby reducing time required for determining the backward predictive coding cost of the current block, and improving efficiency of determining the backward predictive coding cost of the current block.

Further, the coding mode of the current block may be directly determined based on the forward predictive coding cost and the backward predictive coding cost of the current block, avoiding that the coding mode of the current block is determined by traversing various predictive coding modes. For example, forward predictive coding is first attempted, then backward predictive coding is attempted, and after all predictive coding modes are attempted, a mode with a lowest coding cost is selected as a final predictive coding mode of the current block.

Time required for determining the coding mode of the current block is reduced, and efficiency of determining the coding mode of the current block is improved, thereby achieving a technical effect of improving video coding efficiency, and further resolving a technical problem of low video coding efficiency.

In this embodiment, the foregoing terminal device may include but is not limited to one of the following: a mobile phone (such as an Android phone or an iOS phone), a notebook computer, a tablet computer, a palmtop computer, a mobile internet device (MID), a PAD, a desktop computer, a smart television, or the like. A target client may be a video client, an instant messaging client, a browser client, an education client, or the like. The foregoing network may include but is not limited to a wired network or a wireless network. The wired network includes: a local area network, a metropolitan area network, and a wide area network. The wireless network includes: Bluetooth, wireless fidelity (Wi-Fi), and another network implementing wireless communication. The foregoing server may be a single server, a server cluster including a plurality of servers, or a cloud server. The foregoing is merely an example, and is not limited in this embodiment.

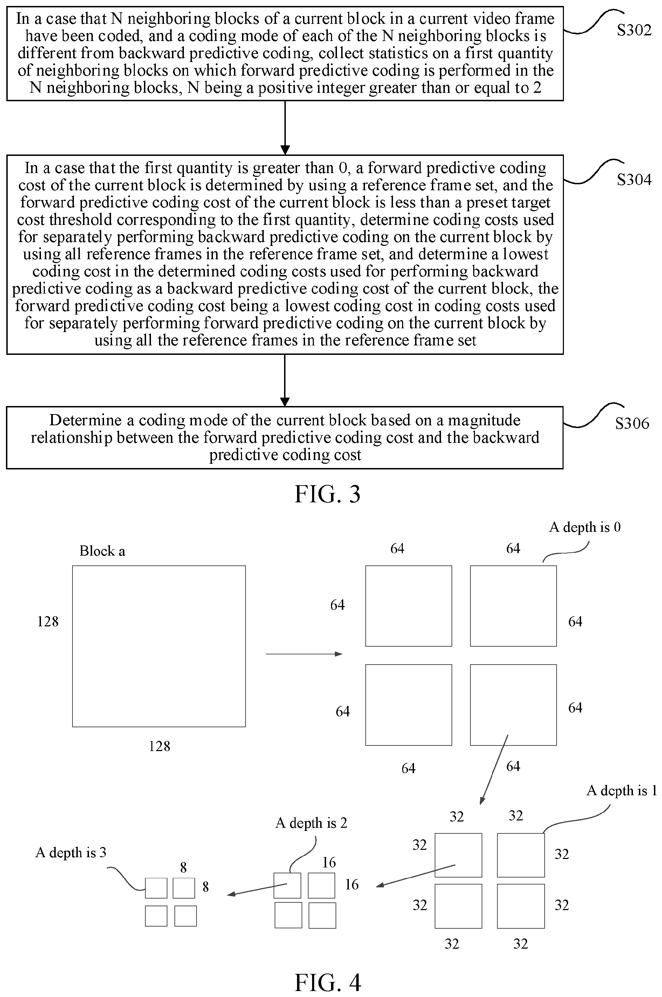

The video coding method in the embodiments of this application may be, but is not limited to being, performed by a terminal device or a server. For example, the video coding method in the embodiments of this application is performed by a coder in the terminal device or a coder in the server. In an example, some operations, for example, operation S302 or operations S302 and S304 in FIG. 3, in the video coding method in the embodiments of this application may be, but are not limited to being, performed by the server (for example, the coder in the server). Other operations, for example, operations S304 and S306 or operation S306 in FIG. 3, in the video coding method in the embodiments of this application may be, but are not limited to being, performed by the terminal device (for example, the coder in the terminal device).

In an implementation, FIG. 3 is a flowchart of an exemplary video coding method according to an embodiment of this application. As shown in FIG. 3, a procedure of the video coding method may include the following operations.

Operation S302: In a case that N neighboring blocks of a current block in a current video frame have been coded, and a coding mode of each of the N neighboring blocks is different from backward predictive coding, collect statistics on a first quantity of neighboring blocks on which forward predictive coding is performed in the N neighboring blocks, N being a positive integer greater than or equal to 2.

In some embodiments, coding may be performed video frame by video frame according to a coding sequence of the video frames. A video frame that is being coded currently is referred to as a current video frame. When the current video frame is coded, the current video frame is divided into a plurality of blocks, and coding is performed block by block. A block that is being coded currently is referred to as a current block. The coding sequence of the video frames may be determined by using timestamps or frame numbers of the video frames. A block-by-block coding sequence in a video frame may be determined based on positions of blocks in the video frame. Specifically, the blocks may be traversed row by row and column by column from a block at a corner position of the video frame, and each traversed block is coded.

In this embodiment, the block in the video frame may be, but is not limited to, a coding unit divided from the video frame. Some blocks in the current video frame have been coded. The current block may be, but is not limited to, a block that has not been coded in the current video frame. The neighboring blocks may include, but are not limited to, blocks that are neighboring to the current block in a plurality of directions in the current video frame. The plurality of directions may include, but are not limited to, directions such as upper, lower, left, right, upper left, upper right, lower left, and lower right. For example, the neighboring blocks may include, but are not limited to, a left block of the current block in the current video frame, an upper block of the current block in the current video frame, or an upper left block of the current block in the current video frame. The N neighboring blocks may be but are not limited to at least some neighboring blocks in the neighboring blocks of the current block. Quantities of neighboring blocks of different blocks may be, but are not limited to being, the same or different, and quantity ranges in which the quantities of neighboring blocks of different blocks fall may be, but are not limited to being, the same. For example, maximum values of quantities of neighboring blocks of a block a and a block b are both 3 and minimum values are both 0.

In this embodiment, a coding mode of the block may include, but is not limited to, intra-frame predictive coding, inter-frame predictive coding, or the like. According to a direction of a reference frame used for coding, the inter-frame predictive coding may include, but is not limited to, forward predictive coding, backward predictive coding, bi-directional predictive coding, or the like.

In an example, the inter-frame predictive coding refers to searching for an optimal matched block for the current block by using a neighboring video frame that has been coded, subtracting a pixel value of each pixel in the optimal matched block from a pixel value of each pixel in the current block to obtain a residual value of each pixel in the current block, and then determining, based on the residual value of each pixel in the current block, coded data obtained by performing inter-frame predictive coding on the current block. For example, a transform operation and a quantization operation are performed on the residual value of each pixel in the current block, to obtain the coded data obtained by performing inter-frame predictive coding on the current block.

For example, when forward predictive coding is performed on the current block in the current video frame, a reference frame allowed to be used may include, but is not limited to, one or more coded video frames before the current video frame. The coded video frames before the current video frame may be, but are not limited to, a video frame whose frame number is before a frame number of the current video frame, a video frame whose frame number is after the frame number of the current video frame, and/or the like.

In a case that backward predictive coding is performed on the current block in the current video frame, a reference frame allowed to be used may include, but is not limited to, one or more coded video frames before the current video frame. The coded video frames before the current video frame may include, but are not limited to, a video frame whose frame number is after a frame number of the current video frame, a video frame whose frame number is before the frame number of the current video frame, and/or the like.

In a case that bi-directional predictive coding is performed on the current block in the current video frame, both a previous video frame and a subsequent video frame are needed to perform inter-frame bi-directional predictive coding in a motion prediction mode. For example, a B frame uses a previous I frame or P frame and a subsequent P frame as reference frames, and a residual value of each pixel in a current block in the B frame and two motion vectors corresponding to the current block (for example, including a motion vector between the current block in the B frame and an optimal matched block in the previous reference frame, and a motion vector between the current block in the B frame and an optimal matched block in the subsequent reference frame) are determined.

In this embodiment, when the N neighboring blocks of the current block in the current video frame have been coded, and the coding mode of each of the N neighboring blocks is different from the backward predictive coding, the coding mode of each of the N neighboring blocks of the current block is not the backward predictive coding, but may be another coding mode such as forward predictive coding, bi-directional predictive coding, or intra-frame predictive coding. In this case, the quantity of neighboring blocks on which forward predictive coding is performed in the N neighboring blocks may be obtained, but this is not limited.

Operation S304: In a case that the first quantity is greater than 0, a forward predictive coding cost of the current block is determined by using a reference frame set, and the forward predictive coding cost of the current block is less than a preset target cost threshold corresponding to the first quantity, determining coding costs used for separately performing backward predictive coding on the current block by using all reference frames in the reference frame set, and determining a lowest coding cost in the determined coding costs used for performing backward predictive coding as a backward predictive coding cost of the current block, the forward predictive coding cost being a lowest coding cost in coding costs used for separately performing forward predictive coding on the current block by using all the reference frames in the reference frame set.

In this embodiment, the coding costs used for separately performing forward predictive coding on the current block by using all the reference frames in the reference frame set may include, but are not limited to, computing resources, computing time, and/or the like consumed for separately performing forward predictive coding on the current block by using all the reference frames in the reference frame set. The coding cost depends on a plurality of factors, including data complexity, coding complexity, a computing resource required in a coding process, a speed requirement for coding, and the like. In addition, the coding cost is further affected by a limitation of a hardware device and a performance requirement.

In this embodiment, forward predictive coding may be performed on the current block by using the reference frames in the reference frame set one by one, to obtain a plurality of coding costs (a quantity of coding costs is the same as a quantity of reference frames included in the reference frame set), but this is not limited, and a lowest coding cost in the plurality of coding costs is determined as the forward predictive coding cost of the current block.

In this embodiment, when the first quantity is greater than 0, and the forward predictive coding cost of the current block is less than the preset target cost threshold corresponding to the first quantity, it may indicate that the forward predictive coding cost of the current block is relatively low, and the reference frame in the reference frame set is determined as a reference frame for performing backward predictive coding on the current block. The reference frames for performing forward predictive coding and backward predictive coding on the current block are reference frames in the reference frame set. In this way, it is avoided that all available reference frames need to be searched for when backward predictive coding is performed in a related technology, thereby greatly reducing time required for determining a reference frame for performing backward predictive coding on the current block, and improving efficiency of determining the reference frame for performing backward predictive coding on the current block.

In this embodiment, the forward predictive coding cost is the lowest coding cost in the coding costs used for separately performing forward predictive coding on the current block by using all the reference frames in the reference frame set. In this way, computer resources consumed for performing forward predictive coding on the current block are reduced, and utilization of the computer resources is improved.

In this embodiment, the lowest coding cost in the coding costs used for separately performing backward predictive coding on the current block by using all the reference frames in the reference frame set may be obtained as the backward predictive coding cost of the current block. However, this is not limited. Specifically, backward predictive coding is performed on the current block by using the reference frames in the reference frame set one by one, to obtain a plurality of coding costs (a quantity of coding costs is the same as a quantity of reference frames), and a lowest coding cost in the plurality of coding costs is determined as the backward predictive coding cost of the current block. In this way, a quantity of reference frames that need to be searched for when backward predictive coding is performed on the current block is reduced. In addition, computer resources consumed for performing backward predictive coding on the current block are reduced, and utilization of the computer resources is improved.

To better understand a process of determining the forward predictive coding cost and the backward predictive coding cost in this embodiment of this application, the process of determining the forward predictive coding cost and the backward predictive coding cost in this embodiment of this application is explained and described below with reference to an exemplary embodiment, which may be, but is not limited to being, applicable to this embodiment of this application.

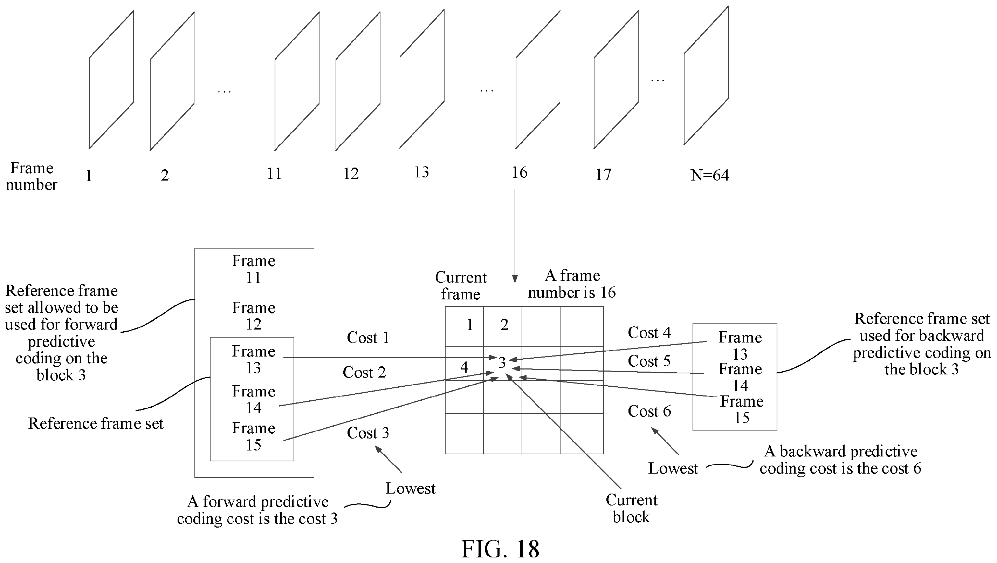

As shown in FIG. 18, a current video may include but is not limited to a plurality of video frames with frame numbers, for example, video frames whose frame numbers are 1 to 64. A current video frame may be but is not limited to a to-be-coded video frame in the current video. For example, the current video frame may be but is not limited to a video frame whose frame number is 16 (or referred to as a frame 16). A current block in the current video frame may be but is not limited to a to-be-coded block in the current video frame. For example, the current block is a block 3. Neighboring blocks of the block 3 may include, but are not limited to, a left neighboring block of the block 3, an upper neighboring block of the block 3, an upper left neighboring block, a right neighboring block, and an upper right neighboring block. For example, the neighboring blocks of the block 3 may include, but are not limited to, the block 1, the block 2, and the block 4. N neighboring blocks of the block 3 may include, but are not limited to, at least two neighboring blocks in the left neighboring block of the block 3, the upper neighboring block of the block 3, the upper left neighboring block, the right neighboring block, and the upper right neighboring block. For example, the N neighboring blocks of the block 3 may include, but are not limited to, the block 1, the block 2, and the block 4. The block 3 may be coded by using, but not limited to, the following operations:

In a case that the block 1, the block 2, and the block 4 in the neighboring blocks of the block 3 have been coded, and coding modes of the block 1, the block 2, and the block 4 are different from backward predictive coding, a first quantity of neighboring blocks on which forward predictive coding is performed in the block 1, the block 2, and the block 4 is determined. In this embodiment, coding modes of both the block 1 and the block 2 are forward predictive coding, and a coding mode of the block 4 is intra-frame predictive coding. The first quantity is 2.

In a case that the first quantity is greater than 0, a forward predictive coding cost of the block 3 is determined by using a reference frame set, and the forward predictive coding cost of the block 3 is less than a preset target cost threshold corresponding to the first quantity, coding costs used for separately performing backward predictive coding on the block 3 by using all reference frames in the reference frame set are determined, and a lowest coding cost in the determined coding costs used for performing backward predictive coding is determined as a backward predictive coding cost of the block 3.

For example, when forward predictive coding is performed on the block 3, an allowed reference frame set may include, but is not limited to, video frames with a frame number 11 to a frame number 15 (or referred to as a frame 11 to a frame 15). To improve coding efficiency, forward predictive coding may be performed by using some reference frames in the allowed reference frame set. For example, forward predictive coding is performed on the block 3 by using the frame 13 to the frame 15. The reference frame set includes some reference frames, for example, the frame 13 to the frame 15, in the allowed reference frame set. A coding cost used for performing forward predictive coding on the block 3 by using the frame 13 is a cost 1, a coding cost used for performing forward predictive coding on the block 3 by using the frame 14 is a cost 2, and a coding cost used for performing forward predictive coding on the block 3 by using the frame 15 is a cost 3. The cost 3 is a lowest coding cost in the cost 1, the cost 2, and the cost 3. In this case, the cost 3 may be determined as the forward predictive coding cost of the block 3, but this is not limited. A reference frame set for performing backward predictive coding on the block 3 may include, but is not limited to, the frame 13 to the frame 15.

In this case, backward predictive coding may be performed on the block 3 by using the frame 13 to the frame 15, but this is not limited. A coding cost used for performing backward predictive coding on the block 3 by using the frame 13 is a cost 4, a coding cost used for performing backward predictive coding on the block 3 by using the frame 14 is a cost 5, and a coding cost used for performing backward predictive coding on the block 3 by using the frame 15 is a cost 6. The cost 6 is a lowest coding cost in the cost 4, the cost 5, and the cost 6. In this case, the cost 6 may be determined as the backward predictive coding cost of the block 3, but this is not limited.

In this embodiment, only an example in which the neighboring blocks of the block 3 include the left block, the upper left block, and the upper block of the block 3 is used for description. Actually, the neighboring blocks of the block 3 may include but are not limited to the left block, the right block, the upper block, the lower block, the upper left block, the upper right block, the lower left block, the lower right block, and the like of the block 3.

Operation S306: Determine a coding mode of the current block based on a magnitude relationship between the forward predictive coding cost and the backward predictive coding cost.

In this embodiment, the coding mode of the current block may be determined based on the magnitude relationship between the forward predictive coding cost and the backward predictive coding cost, but this is not limited. In this way, it is avoided that forward predictive coding, backward predictive coding, and bi-directional predictive coding need to be attempted one by one and then a mode with a lowest coding cost is selected from the forward predictive coding, the backward predictive coding, and the bi-directional predictive coding as the coding mode of the current block in a related technology. Instead, the coding mode of the current block is directly determined based on the magnitude relationship between the forward predictive coding cost and the backward predictive coding cost, thereby greatly reducing time required for determining the coding mode of the current block, and improving efficiency of determining the coding mode of the current block.

In this embodiment, the coding mode of the current block may be determined based on the magnitude relationship between the forward predictive coding cost and the backward predictive coding cost, and the current block may be coded in the determined coding mode, but this is not limited. In this way, time required for determining the coding mode of the current block is greatly reduced, time required in an entire process of coding the current block is shortened, and efficiency of coding the current block is greatly improved. After the coding mode is determined, video coding on the current block is performed based on the determined coding mode of the current block.

In the foregoing manner, when a plurality of coded neighboring blocks exist in neighboring blocks of the current block, and a coding mode of each neighboring block is different from the backward predictive coding, if a neighboring block on which forward predictive coding has been performed exists in the plurality of coded neighboring blocks of the current block, and the forward predictive coding cost of the current block is less than a cost threshold corresponding to a quantity of neighboring blocks on which forward predictive coding has been performed in the plurality of coded neighboring blocks, the reference frame set used for determining the forward predictive coding cost of the current block is used as a reference frame set for performing backward predictive coding on the current block. In this way, it is avoided that all available reference frames need to be searched for when backward predictive coding is performed on the current block. For example, backward reference frames used for a parent block, a sub-block, a left neighboring block, an upper neighboring block, an upper left neighboring block, and a current optimal mode (for example, merge coding or skip coding) are used as candidate reference frames for backward predictive coding of the current block, thereby reducing time required for determining the reference frame set for performing backward predictive coding on the current block.

In addition, the lowest coding cost in the coding costs used for performing backward predictive coding on the current block by using all the reference frames in the reference frame set may be directly determined as the backward predictive coding cost of the current block, thereby reducing time required for determining the backward predictive coding cost of the current block, and improving efficiency of determining the backward predictive coding cost of the current block.

Further, the coding mode of the current block may be directly determined based on the forward predictive coding cost and the backward predictive coding cost of the current block, avoiding that the coding mode of the current block is determined by traversing various predictive coding modes. For example, forward predictive coding is first attempted, then backward predictive coding is attempted, and after all predictive coding modes are attempted, a mode with a lowest coding cost is selected as a final predictive coding mode of the current block.

Time required for determining the coding mode of the current block is reduced, and efficiency of determining the coding mode of the current block is improved, thereby achieving a technical effect of improving video coding efficiency, and further resolving a technical problem of low video coding efficiency.

In a solution, the target cost threshold may be determined in the following manner, but this is not limited:
S11: determining the target cost threshold corresponding to the first quantity and a size of the current block from a preset cost threshold set, each cost threshold in the cost threshold set corresponding to one quantity in a quantity set and one size in a size set, the quantity set including N positive integers from 1 to N, the first quantity being a quantity in the quantity set, the size set including sizes of different blocks allowed to be coded in the current video frame, and the size of the current block being a size in the size set.

In this embodiment, the quantity set may be, but is not limited to being, configured for recoding a quantity of neighboring blocks on which forward predictive coding is performed in neighboring blocks of a block. Each cost threshold in the cost threshold set corresponds to one quantity in the quantity set and one size in the size set. In the cost threshold set, a cost threshold 1 corresponding to a quantity 1 in the quantity set and a size 1 in the size set is different from a cost threshold 2 corresponding to the quantity 1 in the quantity set and a size 2 in the size set. A cost threshold 3 corresponding to a quantity 2 in the quantity set and the size 1 in the size set is different from a cost threshold 4 corresponding to the quantity 2 in the quantity set and the size 2 in the size set.

In this embodiment, the size set may include, but is not limited to, sizes of different blocks allowed to be coded in the current video frame. For example, the sizes of the blocks may include, but are not limited to, 64*64, 32*32, 16*16, 8*8, and the like. As shown in FIG. 4, there may be a correspondence between a size of a block allowed to be coded and a CU depth, but this is not limited. For example, a size of a block a allowed to be coded in the current video frame is 128*128, and a correspondence between a CU size (or referred to as a block size) and a CU depth includes: a depth is 0, and a CU size is 64*64; a depth is 1, and a CU size is 32*32; a depth is 2, and a CU size is 16*16; a depth is 3, and a CU size is 8*8; and the like.

In this way, a corresponding cost threshold is comprehensively determined based on the sizes of the different blocks allowed to be coded in the current video frame and the quantity of neighboring blocks on which forward predictive coding is performed in the neighboring blocks of the block, thereby improving appropriateness of the determined cost threshold.

In a solution, the cost threshold set may be determined in the following manner, but this is not limited:
S21: coding a group of video frames in a sample video, and obtaining coding information generated by coding the group of video frames, the coding information including an accumulated coding cost set and a count set, each accumulated coding cost in the accumulated coding cost set corresponding to one quantity in the quantity set and one size in the size set, each count in the count set corresponding to one accumulated coding cost in the accumulated coding cost set, an (i, j)^{th} accumulated coding cost in the accumulated coding cost set corresponding to an i^{th} quantity in the quantity set and a j^{th} size in the size set and corresponding to an (i, j)^{th} count in the count set, the (i, j)^{th} count indicating a count of a target coding event occurring in a process of coding the group of video frames, both i and j being positive integers greater than or equal to 1, and the target coding event meaning that forward predictive coding is performed on a block in the group of video frames when N neighboring blocks of the block have been coded, a coding mode of each of the N neighboring blocks of the block is different from the backward predictive coding, a size of the block is the j^{th} size, and a quantity of neighboring blocks on which forward predictive coding is performed in the N neighboring blocks of the block is the i^{th} quantity; and the (i, j)^{th} accumulated coding cost being a sum of forward predictive coding costs of the block in the target coding event that occurs for the (i, j)^{th} count; and
S22: determining the cost threshold set based on the coding information.

To better understand a method of determining the cost threshold set in this embodiment of this application, the following explains and describes a process of determining the cost threshold set in this embodiment of this application with reference to an exemplary embodiment.

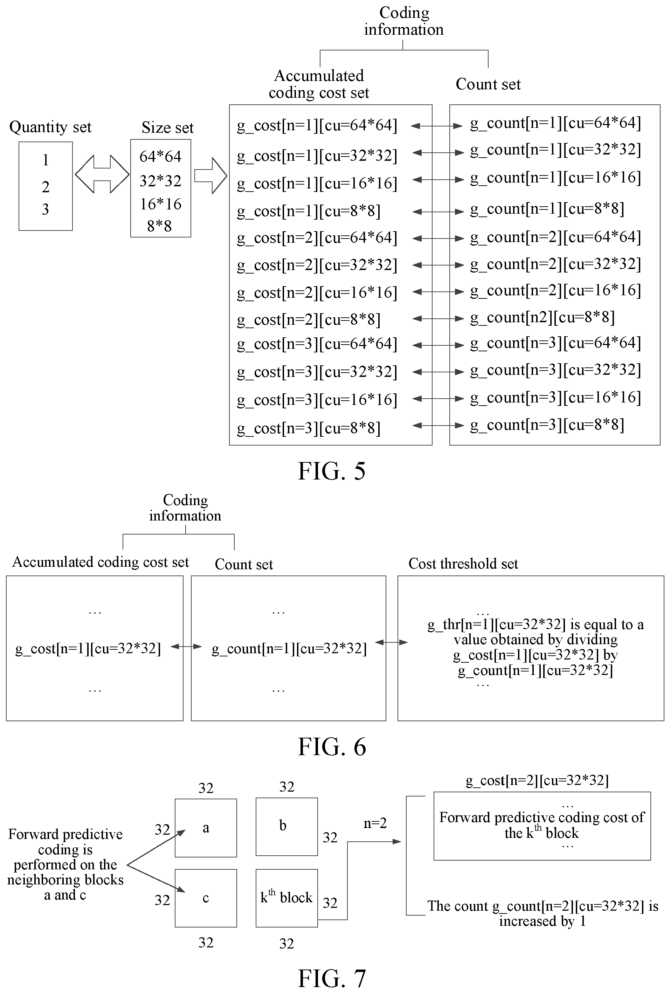

As shown in FIG. 5, the quantity set may include but is not limited to 1, 2, and 3, the size set may include but is not limited to 64*64, 32*32, 16*16, and 8*8, the coding information may include but is not limited to an accumulated coding cost set and a count set, and the accumulated coding cost set may include but is not limited to g_cost[n=1][cu=64*64] (or referred to as an accumulated coding cost), g_cost[n=1][cu=32*32], g_cost[n=1][cu=16*16], g_cost[n=1][cu=8*8], g_cost[n=2][cu=64*64], g_cost[n=2][cu=32*32], g_cost[n=2][cu=16*16], g_cost[n=2][cu=8*8], g_cost[n=3][cu=64*64], g_cost[n=3][cu=32*32], g_cost[n=3][cu=16*16], and g_cost[n=3][cu=8*8].

g_cost[n=1][cu=64*64] corresponds to a quantity being equal to 1 in the quantity set and 64*64 in the size set, g_cost[n=1][cu=32*32] corresponds to the quantity being equal to 1 in the quantity set and 32*32 in the size set, g_cost[n=1][cu=16*16] corresponds to the quantity being equal to 1 in the quantity set and 16*16 in the size set, and g_cost[n=1][cu=8*8] corresponds to the quantity being equal to 1 in the quantity set and 8*8 in the size set. g_cost[n=2][cu=64*64] corresponds to a quantity being equal to 2 in the quantity set and 64*64 in the size set, g_cost[n=2][cu=32*32] corresponds to the quantity being equal to 2 in the quantity set and 32*32 in the size set, g_cost[n=2][cu=16*16] corresponds to the quantity being equal to 2 in the quantity set and 16*16 in the size set, and g_cost[n=2][cu=8*8] corresponds to the quantity being equal to 2 in the quantity set and 8*8 in the size set. g_cost[n=3][cu=64*64] corresponds to a quantity being equal to 3 in the quantity set and 64*64 in the size set, g_cost[n=3][cu=32*32] corresponds to the quantity being equal to 3 in the quantity set and 32*32 in the size set, g_cost[n=3][cu=16*16] corresponds to the quantity being equal to 3 in the quantity set and 16*16 in the size set, and g_cost[n=3][cu=8*8] corresponds to the quantity being equal to 3 in the quantity set and 8*8 in the size set.

g_cost[n=1][cu=64*64] corresponds to g_count[n=1][cu=64*64] in the count set, g_cost[n=1][cu=32*32] corresponds to g_count[n=1][cu=32*32] in the count set, g_cost[n=1][cu=16*16] corresponds to g_count[n=1][cu=16*16] in the count set, and g_cost[n=1][cu=8*8] corresponds to g_count[n=1][cu=8*8] in the count set.

g_cost[n=2][cu=64*64] corresponds to g_count[n=2][cu=64*64] in the count set, g_cost[n=2][cu=32*32] corresponds to g_count[n=2][cu=32*32] in the count set, g_cost[n=2][cu=16*16] corresponds to g_count[n=2][cu=16*16] in the count set, and g_cost[n=2][cu=8*8] corresponds to g_count[n=2][cu=8*8] in the count set.

g_cost[n=3][cu=64*64] corresponds to g_count[n=3][cu=64*64] in the count set, g_cost[n=3][cu=32*32] corresponds to g_count[n=3][cu=32*32] in the count set, g_cost[n=3][cu=16*16] corresponds to g_count[n=3][cu=16*16] in the count set, and g_cost[n=3][cu=8*8] corresponds to g_count[n=3][cu=8*8] in the count set.

g_count[n=1][cu=64*64] indicates a count of a target coding event occurring in a process of coding the group of video frames. The target coding event means that forward predictive coding is performed on a block in the group of video frames when N neighboring blocks of the block have been coded, a coding mode of each of the N neighboring blocks of the block is different from the backward predictive coding, a size of the block is 64*64, and a quantity of neighboring blocks on which forward predictive coding is performed in the N neighboring blocks of the block is 1.

g_count[n=1][cu=32*32] indicates a count of a target coding event occurring in a process of coding the group of video frames. The target coding event means that forward predictive coding is performed on a block in the group of video frames when N neighboring blocks of the block have been coded, a coding mode of each of the N neighboring blocks of the block is different from the backward predictive coding, a size of the block is 32*32, and a quantity of neighboring blocks on which forward predictive coding is performed in the N neighboring blocks of the block is 1. g_count[n=1][cu=16*16] indicates a count of a target coding event occurring in a process of coding the group of video frames. The target coding event means that forward predictive coding is performed on a block in the group of video frames when N neighboring blocks of the block have been coded, a coding mode of each of the N neighboring blocks of the block is different from the backward predictive coding, a size of the block is 16*16, and a quantity of neighboring blocks on which forward predictive coding is performed in the N neighboring blocks of the block is 1. g_count[n=1][cu=8*8] indicates a count of a target coding event occurring in a process of coding the group of video frames. The target coding event means that forward predictive coding is performed on a block in the group of video frames when N neighboring blocks of the block have been coded, a coding mode of each of the N neighboring blocks of the block is different from the backward predictive coding, a size of the block is 8*8, and a quantity of neighboring blocks on which forward predictive coding is performed in the N neighboring blocks of the block is 1.

g_count[n=2][cu=64*64] indicates a count of a target coding event occurring in a process of coding the group of video frames. The target coding event means that forward predictive coding is performed on a block in the group of video frames when N neighboring blocks of the block have been coded, a coding mode of each of the N neighboring blocks of the block is different from the backward predictive coding, a size of the block is 64*64, and a quantity of neighboring blocks on which forward predictive coding is performed in the N neighboring blocks of the block is 2. g_count[n=2][cu=32*32] indicates a count of a target coding event occurring in a process of coding the group of video frames. The target coding event means that forward predictive coding is performed on a block in the group of video frames when N neighboring blocks of the block have been coded, a coding mode of each of the N neighboring blocks of the block is different from the backward predictive coding, a size of the block is 32*32, and a quantity of neighboring blocks on which forward predictive coding is performed in the N neighboring blocks of the block is 2. g_count[n=2][cu=16*16] indicates a count of a target coding event occurring in a process of coding the group of video frames. The target coding event means that forward predictive coding is performed on a block in the group of video frames when N neighboring blocks of the block have been coded, a coding mode of each of the N neighboring blocks of the block is different from the backward predictive coding, a size of the block is 16*16, and a quantity of neighboring blocks on which forward predictive coding is performed in the N neighboring blocks of the block is 2. g_count[n=2][cu=8*8] indicates a count of a target coding event occurring in a process of coding the group of video frames. The target coding event means that forward predictive coding is performed on a block in the group of video frames when N neighboring blocks of the block have been coded, a coding mode of each of the N neighboring blocks of the block is different from the backward predictive coding, a size of the block is 8*8, and a quantity of neighboring blocks on which forward predictive coding is performed in the N neighboring blocks of the block is 2.

g_count[n=3][cu=64*64] indicates a count of a target coding event occurring in a process of coding the group of video frames. The target coding event means that forward predictive coding is performed on a block in the group of video frames when N neighboring blocks of the block have been coded, a coding mode of each of the N neighboring blocks of the block is different from the backward predictive coding, a size of the block is 64*64, and a quantity of neighboring blocks on which forward predictive coding is performed in the N neighboring blocks of the block is 3. g_count[n=3][cu=32*32] indicates a count of a target coding event occurring in a process of coding the group of video frames. The target coding event means that forward predictive coding is performed on a block in the group of video frames when N neighboring blocks of the block have been coded, a coding mode of each of the N neighboring blocks of the block is different from the backward predictive coding, a size of the block is 32*32, and a quantity of neighboring blocks on which forward predictive coding is performed in the N neighboring blocks of the block is 3. g_count[n=3][cu=16*16] indicates a count of a target coding event occurring in a process of coding the group of video frames. The target coding event means that forward predictive coding is performed on a block in the group of video frames when N neighboring blocks of the block have been coded, a coding mode of each of the N neighboring blocks of the block is different from the backward predictive coding, a size of the block is 16*16, and a quantity of neighboring blocks on which forward predictive coding is performed in the N neighboring blocks of the block is 3. g_count[n=3][cu=8*8] indicates a count of a target coding event occurring in a process of coding the group of video frames. The target coding event means that forward predictive coding is performed on a block in the group of video frames when N neighboring blocks of the block have been coded, a coding mode of each of the N neighboring blocks of the block is different from the backward predictive coding, a size of the block is 8*8, and a quantity of neighboring blocks on which forward predictive coding is performed in the N neighboring blocks of the block is 3.

In this way, the cost thresholds in the cost threshold set are divided based on the quantity of neighboring blocks on which forward predictive coding is performed in the neighboring blocks of the block and the sizes of the blocks, thereby improving association between the cost thresholds and the sizes of the blocks and the coding modes of the neighboring blocks of the block.

In a solution, an (i, j)^{th} cost threshold in the cost threshold set may be determined through the following operation, but this is not limited, the (i, j)^{th} cost threshold corresponding to the i^{th} quantity in the quantity set and the j^{th} size in the size set:
S31: determining the (i, j)^{th} cost threshold to be equal to a value obtained by dividing the (i, j)^{th} accumulated coding cost by the (i, j)^{th} count.

In this embodiment, the (i, j)^{th} cost threshold may be determined to be equal to the value obtained by dividing the (i, j)^{th} accumulated coding cost by the (i, j)^{th} count, but this is not limited. As shown in FIG. 6, g_thr[n=1][cu=32*32] (or referred to as a cost threshold) may be determined to be a value obtained by dividing g_cost[n=1][cu=32*32] by g_count[n=1][cu=32*32]. g_thr[n=1][cu=32*32] is a cost threshold corresponding to the i^{th} quantity being 1 (n is equal to 1) and the j^{th} size being 32*32. g_thr[n=1][cu=32*32] is a (1, 32*32)^{th} cost threshold.

In this way, the cost thresholds in the cost threshold set are determined based on the accumulated coding cost and the count set in the coding information, and the cost thresholds in the cost threshold set are precisely divided, improving accuracy of determining the cost thresholds.

In a solution, in a process of coding the group of video frames in the sample video, the method further includes:
S41: obtaining a forward predictive coding cost and a backward predictive coding cost of a k^{th} block in the group of video frames when N neighboring blocks of the k^{th} block have been coded, a coding mode of each of the N neighboring blocks of the k^{th} block is different from the backward predictive coding, a size of the k^{th} block is the j^{th} size, and a quantity of neighboring blocks on which forward predictive coding is performed in the N neighboring blocks of the k^{th} block is the i^{th} quantity, k being a positive integer greater than or equal to 1; and
S42: adding the forward predictive coding cost of the k^{th} block to the (i, j)^{th} accumulated coding cost and increasing the (i, j)^{th} count by 1 when determining, based on the forward predictive coding cost and the backward predictive coding cost of the k^{th} block, that a coding mode of the k^{th} block is the forward predictive coding.

In this embodiment, when the forward predictive coding cost of the k^{th} block is less than the backward predictive coding cost, the coding mode of the k^{th} block is determined as the forward predictive coding. In this way, a coding cost used for coding the k^{th} block is reduced, and efficiency of coding the k^{th} block is improved.

In this embodiment, with the progress of a process of coding the video frame, the (i, j)^{th} accumulated coding cost and the (i, j)^{th} count may change accordingly, but this is not limited. As shown in FIG. 7, neighboring blocks of the k^{th} block may include but are not limited to a block a, a block b, and a block c. Sizes of the k^{th} block, the block a, the block b, and the block c are all 32*32, and the block a, the block b, and the block c are coded blocks. Forward predictive coding is performed on the block a and the block c. In this embodiment, the j^{th} size is 32*32, the i^{th} quantity is 2, that is, n is equal to 2, and CU is equal to 32*32.

The forward predictive coding cost and the backward predictive coding cost of the k^{th} block are obtained. When the coding mode of the k^{th} block is determined as the forward predictive coding based on the forward predictive coding cost and the backward predictive coding cost of the k^{th} block, the forward predictive coding cost of the k^{th} block is added to g_cost[n=2][cu=32*32] (or referred to as a (2, 32*32)^{th} accumulated coding cost), and the count g_count[n=2][cu=32*32] (or referred to as a (32*32)^{th} count) is increased by 1. In this way, in the process of coding the video frame, the accumulated coding cost in the accumulated coding cost set and the count in the count set are updated in real time, so that the cost threshold in the cost threshold set is updated in real time, and real-time performance of the cost threshold in the cost threshold set is improved.

To better understand a process of determining the cost threshold set in this embodiment of this application, the following explains and describes a process of determining the cost threshold in the cost threshold set in this embodiment of this application with reference to an exemplary embodiment, which may be, but is not limited to being, applicable to this embodiment of this application.

In a case that an original algorithm encounters a worst case and the forward predictive coding is finally selected for inter in a related technology, in this embodiment of this application, the forward predictive coding cost and the count in the count set may be accumulated based on the quantity n of neighboring blocks for which forward prediction is used and the CU depth, but this is not limited. When coding ends, an average value of coding costs for different values of n and different CU depths is calculated, and is used as a cost threshold for a combination of n and the CU depth.

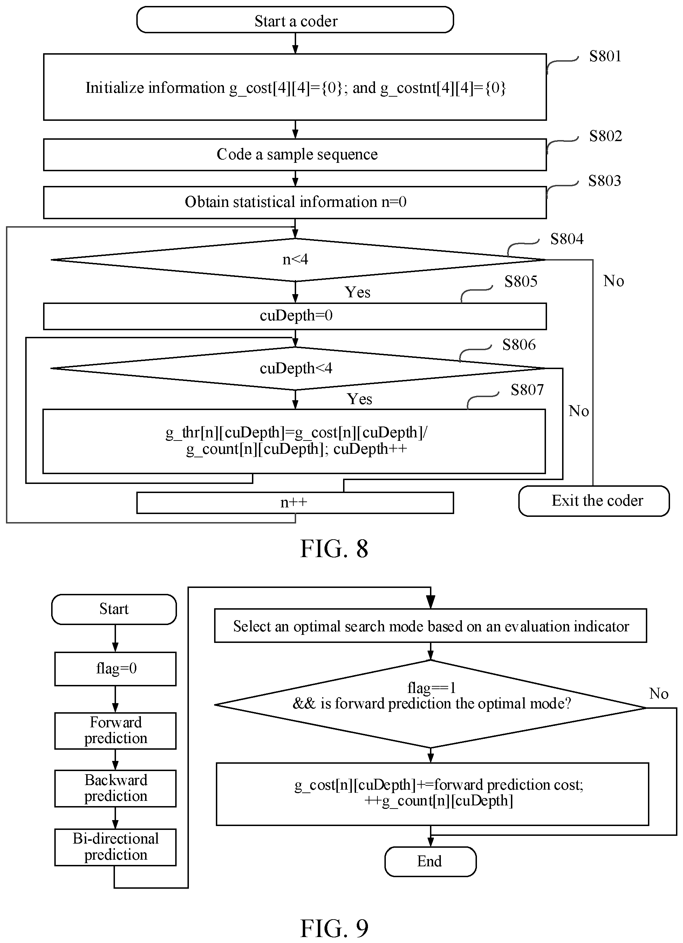

Specifically, as shown in FIG. 8, when a coder is started, a g_cost table (or referred to as an accumulated coding cost set) and a g_count table (or referred to as a count set) are initialized, to respectively accumulate the coding cost and the count. Specifically, the following operations may be included, but this is not limited.

Operation S801: Initialize information, and initialize g_cost[n=4][4]={0} and g_count[n=4][4]={0}.

Operation S802: Code a sample sequence.

Operation S803: Obtain statistical information n=0.

Operation S804: Determine whether n is less than 4, and perform operation S805 when determining that n is less than 4, or exit the coder when determining that n is greater than or equal to 4.

Operation S805: cuDepth is equal to 0.

Operation S806: Determine whether cuDepth is less than 4, and perform operation S807 when determining that cuDepth is less than 4.

Operation S807: Determine a value obtained by dividing g_thr[n=2][cuDepth]=g_cost[n=2][cuDepth] by g_count[n=2][cuDepth]; and cuDepth++.

As shown in FIG. 9, before different prediction modes of inter are attempted, a flag is set to 0, and the flag is configured for marking whether an original algorithm encounters a worst case (to be specific, backward predictive coding is used for none of all neighboring blocks of a current block, and all available reference frames need to be traversed).

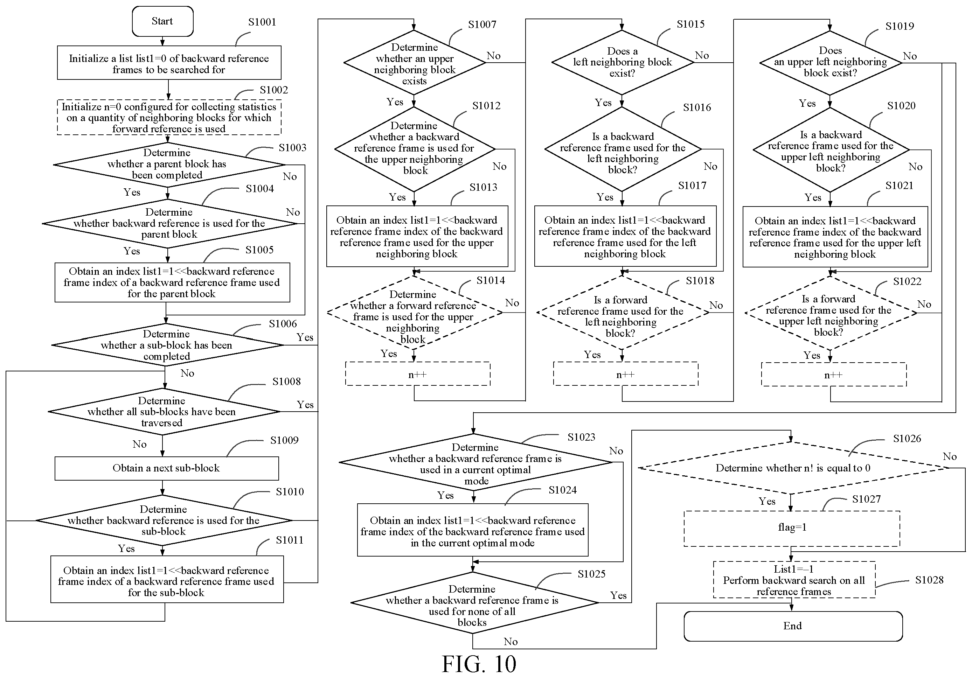

As shown in FIG. 10, when the original algorithm encounters the worst case, the flag is set to 1. The following operations may be included, but this is not limited.

Operation S1001: Initialize a list list1=0 of backward reference frames to be searched for.

Operation S1002: Initialize n=0 configured for collecting statistics on a quantity of neighboring blocks for which forward reference is used. Specifically, before a related fast algorithm is performed, the variable n=0 is initialized, to mark the quantity of neighboring blocks for which forward prediction is used.

Operation S1003: Determine whether a parent block has been completed, and perform operation S1004 when determining that the parent block has been completed.

Operation S1004: Determine whether backward reference is used for the parent block, and perform operation S1005 when determining that the backward reference is used for the parent block.

Operation S1005. Obtain an index list1=1<<backward reference frame index of a backward reference frame used for the parent block.

Operation S1006: Determine whether a sub-block has been completed, and perform operation S1007 when determining that the sub-block has been completed, or perform operation S1008 to operation S1011 when determining that the sub-block has not been completed.

Operation S1007: Determine whether an upper neighboring block exists, and perform operation S1012 to operation S1014 when determining that the upper neighboring block exists.

Operation S1008: Determine whether all sub-blocks have been traversed, and perform operation S1007 when determining that all the sub-blocks have been traversed, or perform operation S1009 when determining that not all the sub-blocks have been traversed.

Operation S1009: Obtain a next sub-block.

Operation S1010: Determine whether backward reference is used for the sub-block, and perform operation S1011 when determining that the backward reference is used for the sub-block.

Operation S1011: Obtain an index list1=1<<backward reference frame index of a backward reference frame used for the sub-block.

Operation S1012: Determine whether a backward reference frame is used for the upper neighboring block, and perform operation S1013 when determining that the backward reference frame is used for the upper neighboring block, or perform operation S1014 when determining that the backward reference frame is not used for the upper neighboring block.

Operation S1013: Obtain an index list1=1<<backward reference frame index of the backward reference frame used for the upper neighboring block.

Operation S1014: Determine whether a forward reference frame is used for the upper neighboring block, and n++ when determining that the forward reference frame is used for the upper neighboring block.

In this embodiment, only processing operations (for example, operation S1007 to operation S1014) for the neighboring block located above the current block (or referred to as the upper neighboring block) are explained and described. Actually, processing operations (for example, operation S1015 to operation S1018) for the neighboring block located on the left of the current block (or referred to as the left neighboring block) and processing operations (for example, operation S1019 to operation S1022) for the neighboring block located on the upper left of the current block (or referred to as the upper left neighboring block) are similar to the processing operations for the upper neighboring block. When the left neighboring block is processed, if the left neighboring block exists and forward predictive coding is used for the left neighboring block, n++. When the upper left neighboring block is processed, if the upper left neighboring block exists and forward predictive coding is used for the upper left neighboring block, n++. Details are not described herein again.

Operation S1023: Determine whether a backward reference frame is used in a current optimal mode, and perform operation S1024 when determining that the backward reference frame is used in the current optimal mode, or perform operation S1025 when determining that the backward reference frame is not used in the current optimal mode.

Operation S1024: Obtain an index list1=1<<backward reference frame index of the backward reference frame used in the current optimal mode.

Operation S1025: Determine whether a backward reference frame is used for none of all blocks, and perform operation S1026 when determining that the backward reference frame is used for none of all the blocks, or end the process when determining that the backward reference frame is used for a block in all the blocks.

Operation S1026: Determine whether n! is equal to 0, and perform operation S1027 when determining that n! is equal to 0, or perform operation S1028 when determining that n! is not equal to 0.

Operation S1027: The flag is equal to 1.

Operation S1028: List1=-1 and perform backward search on all reference frames.

As shown in FIG. 9, forward predictive coding, backward predictive coding, and bi-directional predictive coding are performed on a block. When the bi-directional predictive coding ends, an optimal prediction mode is selected by comparing coding costs. For example, an optimal search mode is selected based on an evaluation indicator. In a case that a flag is equal to 1 and the optimal prediction mode is the forward predictive coding, a coding cost of the optimal prediction mode is added to g_cost[n][cuDepth] (where cuDepth is a depth of a cu), and g_count[n][cuDepth] is increased by 1.

After an entire sequence is coded, values obtained by dividing g_cost[n][cuDepth] by g_count[n][cuDepth] for different combinations of n and cuDepth are outputted as cost thresholds for the combinations of n and cuDepth. The cost threshold is (g_thr[n][cuDepth]) in an optimized algorithm.

In a solution, before the first quantity of neighboring blocks on which forward predictive coding is performed in the N neighboring blocks is determined, the method further includes:
S51: coding each of the N neighboring blocks, a coding mode of each of the N neighboring blocks being one of the forward predictive coding and the backward predictive coding, or one of the forward predictive coding, the backward predictive coding, and bi-directional predictive coding, or one of the forward predictive coding, the backward predictive coding, the bi-directional predictive coding, and intra-frame predictive coding.

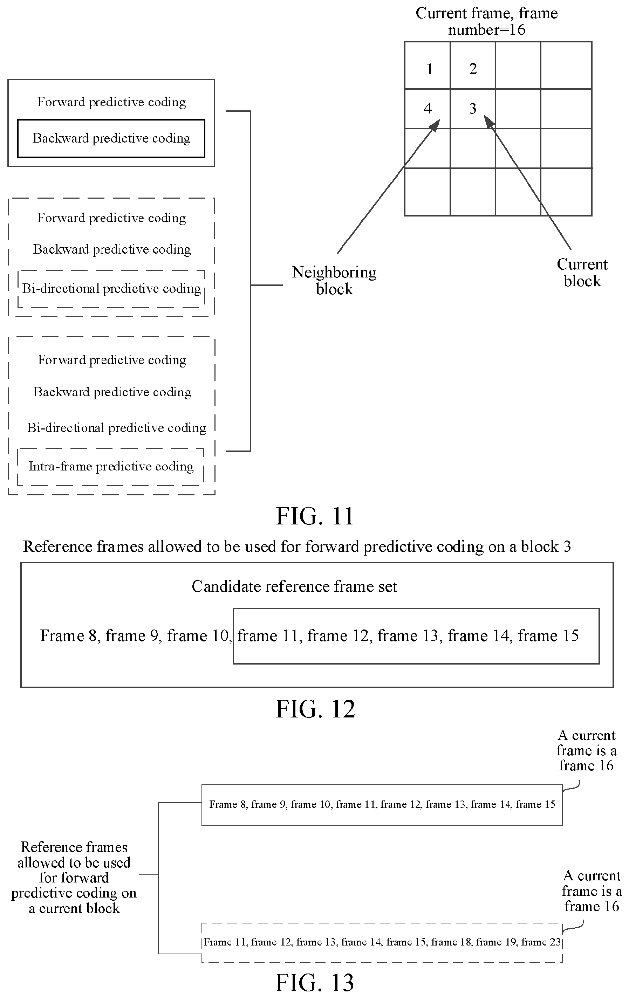

As shown in FIG. 11, an example in which the current video frame is a video frame whose frame number is 16 and the current block is a block 3 in the current video frame may be used, but this is not limited. Neighboring blocks of the block 3 include a block 1, a block 2, and a block 4. In this case, a mode of coding each neighboring block in the block 1, the block 2, and the block 4 may be one of the forward predictive coding and the backward predictive coding, or one of the forward predictive coding, the backward predictive coding, and the bi-directional predictive coding, or one of the forward predictive coding, the backward predictive coding, the bi-directional predictive coding, and the intra-frame predictive coding. For example, a mode of coding the block 4 may be the backward predictive coding, the bi-directional predictive coding, the intra-frame predictive coding, or the like.

In this way, the neighboring blocks are coded in a plurality of coding modes, and coding modes of the neighboring blocks may be the same or different, thereby expanding a range of coding modes selected for coding the neighboring blocks, and improving diversity of the coding modes for coding the neighboring blocks.

In a solution, before the coding costs used for separately performing backward predictive coding on the current block by using all the reference frames in the reference frame set are determined, the method further includes:
S61: determining a portion of M reference frames as the reference frame set when reference frames allowed to be used for performing forward predictive coding on the current block are the M reference frames, M being a positive integer greater than or equal to 2.

To reduce coding time and improve coding efficiency, a portion of reference frames may be selected from the reference frames allowed to be used for performing forward predictive coding on the current block as the reference frame set, but this is not limited. In this embodiment, the reference frames allowed to be used for performing forward predictive coding on the current block are related to a coder. The coder may include but is not limited to an H.265 coder, an H.264 coder, an AV1 coder, an H.266 coder, or the like.

As shown in FIG. 12, reference frames allowed to be used for performing forward predictive coding on the block 3 may include but are not limited to a frame 8, a frame 9, a frame 10, a frame 11, a frame 12, a frame 13, a frame 14, and a frame 15. In this case, to reduce coding time and improve coding efficiency, the frame 11, the frame 12, the frame 13, the frame 14, and the frame 15 may be determined as a reference frame set, but this is not limited. In this way, a quantity of reference frames in the reference frame set is reduced, time required for coding is reduced, and coding efficiency is improved.

In this way, a portion of reference frames is selected from the reference frames allowed to be used for performing forward predictive coding on the current block as the reference frame set. A quantity of reference frames used for performing forward predictive coding on the current block is reduced, time required for performing forward predictive coding on the current block is reduced, and efficiency of performing forward predictive coding on the current block is improved.

In a solution, the portion of the M reference frames may be determined as the reference frame set in the following manner, but this is not limited:
S71: determining the portion of the M reference frames as the reference frame set when the current video frame is a real-time transmitted video frame and the reference frames allowed to be used for performing forward predictive coding on the current block are the M reference frames.

In a case that the current video frame is a video frame transmitted in real time, for example, in a screen sharing scenario of a real-time online conferencing application or a screen sharing scenario of a real-time online communication application, a similarity between former and latter video frames is high. To ensure real-time performance and smoothness of the video frames and avoid problems such as frame freezing, a high coding speed is usually needed. In this case, a portion of the reference frames allowed to be used for performing forward predictive coding on the current block may be determined as the reference frame set. In this way, the quantity of reference frames for coding the current block is reduced, a speed of performing predictive coding on the video in real time is improved, and smoothness of the video frame transmitted in real time is ensured.

In a solution, before the portion of the M reference frames is determined as the reference frame set, the method further includes:
S81: determining M coded video frames as the M reference frames, frame numbers of the M video frames being less than a frame number of the current video frame; or
S82: determining P coded video frames and Q coded video frames as the M reference frames, M being equal to a sum of P and Q, frame numbers of the P video frames being less than a frame number of the current video frame, frame numbers of the Q video frames being greater than the frame number of the current video frame, and P and Q being positive integers greater than or equal to 1.

In this embodiment, frame numbers of the reference frames allowed to be used for performing forward predictive coding on the current block may be but are not limited to being less than a frame number of the current video frame, and the reference frames allowed to be used for performing forward predictive coding on the current block are coded video frames before the current video frame. Alternatively, frame numbers of the reference frames allowed to be used for performing forward predictive coding on the current block may be but are not limited to being less than or greater than a frame number of the current video frame, and the reference frames allowed to be used for performing forward predictive coding on the current block are coded video frames before the current video frame and coded video frames after the current video frame.

As shown in FIG. 13, the frame number of the current video frame is 16 (or referred to as a frame 16). In this case, the reference frames allowed to be used for performing forward predictive coding on the current block in the current video frame may include but are not limited to a video frame whose frame number is 8 (or referred to as a frame 8), a video frame whose frame number is 9 (or referred to as a frame 9), a video frame whose frame number is 10 (or referred to as a frame 10), a video frame whose frame number is 11 (or referred to as a frame 11), a video frame whose frame number is 12 (or referred to as a frame 12), a video frame whose frame number is 13 (or referred to as a frame 13), a video frame whose frame number is 14 (or referred to as a frame 14), and a video frame whose frame number is 15 (or referred to as a frame 15). The frame 8, the frame 9, the frame 10, the frame 11, the frame 12, the frame 13, the frame 14, and the frame 15 are all coded video frames before the frame 16. Alternatively, the reference frames allowed to be used for performing forward predictive coding on the current block in the current video frame may include but are not limited to a frame 11, a frame 12, a frame 13, a frame 14, a frame 15, a video frame whose frame number is 18 (or referred to as a frame 18), a video frame whose frame number is 19 (or referred to as a frame 19), and a video frame whose frame number is 23 (or referred to as a frame 23). The frame 11, the frame 12, the frame 13, the frame 14, and the frame 15 are coded video frames before the frame 16, and the frame 18, the frame 19, and the frame 23 are coded video frames after the frame 16.

In this way, the reference frames allowed to be used for performing forward predictive coding on the current block are determined from coded video frames before the current video frame and coded video frames after the current video frame, a range of the reference frames allowed to be used for performing forward predictive coding on the current block is improved, and coding quality of performing predictive coding on the current block is improved.

In a solution, the following manner may be configured for determining the coding mode of the current block and coding the current block in the determined coding mode, but this is not limited:
S91: determining the coding mode of the current block as the forward predictive coding when the forward predictive coding cost is less than the backward predictive coding cost; or determining the coding mode of the current block as the backward predictive coding when the forward predictive coding cost is greater than the backward predictive coding cost; or
S92: determining the coding mode of the current block as the forward predictive coding when the forward predictive coding cost is less than the backward predictive coding cost and a bi-directional predictive coding cost of the current block, the bi-directional predictive coding cost being a lowest coding cost in coding costs used for separately performing bi-directional predictive coding on the current block by using all the reference frames in the reference frame set; determining the coding mode of the current block as the backward predictive coding when the backward predictive coding cost is less than the forward predictive coding cost and the bi-directional predictive coding cost; or determining the coding mode of the current block as the bi-directional predictive coding when the bi-directional predictive coding cost is less than the forward predictive coding cost and the backward predictive coding cost.

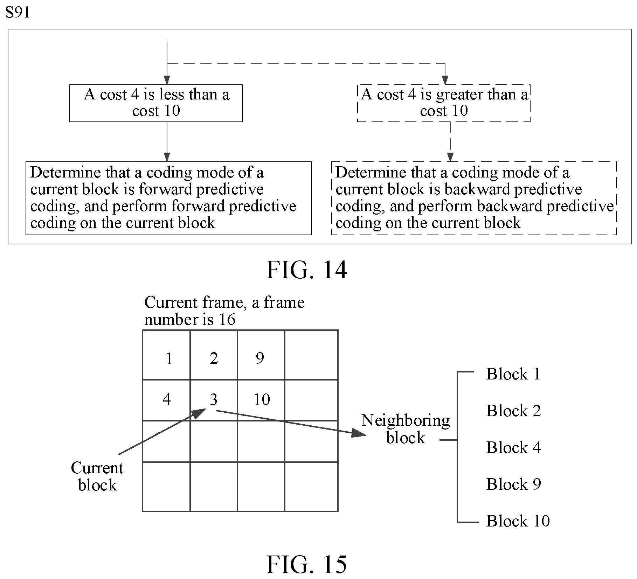

To reduce a coding cost, a coding mode with a low coding cost may be selected based on the forward predictive coding cost and the backward predictive coding cost, but this is not limited. As shown in FIG. 14, the forward predictive coding cost of the current block may be but is not limited to a cost 4, and the backward predictive coding cost of the current block may be but is not limited to a cost 10. In a case that the cost 4 is less than the cost 10, the coding mode of the current block is determined to be forward predictive coding, and forward predictive coding is performed on the current block. In a case that the cost 4 is greater than the cost 10, the coding mode of the current block is determined to be backward predictive coding, and backward predictive coding is performed on the current block. In this way, the coding cost for coding the current block is greatly reduced, and it is avoided that various coding modes such as forward predictive coding and backward predictive coding need to be traversed and then a coding mode with a lowest coding cost is selected in a related technology, thereby reducing time required for determining the coding mode of the current block and improving efficiency of determining the coding mode of the current block.

To improve appropriateness of the determined coding mode of the current block, the coding mode of the current block may be determined from a plurality of coding modes, but this is not limited. For example, when the forward predictive coding cost is less than the backward predictive coding cost and the bi-directional predictive coding cost of the current block, it may indicate that the coding cost for performing forward predictive coding on the current block is the lowest. In this case, the coding mode of the current block is determined to be the forward predictive coding. In a case that the bi-directional predictive coding cost is less than the forward predictive coding cost and the backward predictive coding cost, it may indicate that the coding cost for performing bi-directional predictive coding on the current block is the lowest. In this case, the coding mode of the current block is determined to be the bi-directional predictive coding. In this way, the coding mode of the current block is determined from more coding modes, thereby improving appropriateness of determining the coding mode of the current block. In addition, time required for determining the coding mode of the current block is reduced, and efficiency of determining the coding mode of the current block is improved.

In a solution, after the coding mode of the current block is determined based on the magnitude relationship between the forward predictive coding cost and the backward predictive coding cost, the current block is coded in the determined coding mode, including:
S101: performing forward predictive coding on the current block when the coding mode of the current block is determined as the forward predictive coding; or
S102: performing backward predictive coding on the current block when the coding mode of the current block is determined as the backward predictive coding; or
S103: performing bi-directional predictive coding on the current block when the coding mode of the current block is determined as the bi-directional predictive coding.

In this embodiment, to improve coding efficiency, after the coding mode of the current block is determined based on the magnitude relationship between the forward predictive coding cost and the backward predictive coding cost, the current block is coded in the determined coding mode. For example, when the forward predictive coding cost is less than the backward predictive coding cost, it may indicate that the coding cost for performing forward predictive coding on the current block is the lowest. In this case, the coding mode of the current block is determined to be the forward predictive coding, and forward predictive coding is performed on the current block. In a case that the backward predictive coding cost is less than the forward predictive coding cost, it may indicate that the coding cost for performing backward predictive coding on the current block is the lowest. In this case, the coding mode of the current block is determined to be the backward predictive coding, and backward predictive coding is performed on the current block.

Alternatively, when the forward predictive coding cost is less than the backward predictive coding cost and the bi-directional predictive coding cost of the current block, it may indicate that the coding cost for performing forward predictive coding on the current block is the lowest. In this case, the coding mode of the current block is determined to be the forward predictive coding, and forward predictive coding is performed on the current block. In a case that the bi-directional predictive coding cost is less than the forward predictive coding cost and the backward predictive coding cost, it may indicate that the coding cost for performing bi-directional predictive coding on the current block is the lowest. In this case, the coding mode of the current block is determined to be the bi-directional predictive coding, and bi-directional predictive coding is performed on the current block.

In this way, the current block is coded in a coding mode with a low coding cost, thereby greatly reducing the coding cost used for coding the current block, reducing computer resources required for coding the current block, and improving utilization of the computer resources.

In a solution, the method further includes:
S111: the N neighboring blocks include at least two of the following: a left neighboring block of the current block in the current video frame, an upper neighboring block of the current block in the current video frame, an upper left neighboring block of the current block in the current video frame, a right neighboring block of the current block in the current video frame, or an upper right neighboring block of the current block in the current video frame.

As shown in FIG. 15, the current video frame may be but is not limited to a to-be-coded video frame in the current video. For example, the current video frame may be but is not limited to a video frame whose frame number is 16 (or referred to as a frame 16). The current block in the current video frame may be but is not limited to a to-be-coded block in the current video frame. For example, a current block in the frame 16 may be but is not limited to a block 3. Neighboring blocks of the block 3 may include but are not limited to a left neighboring block of the block 3, an upper neighboring block of the block 3, an upper left neighboring block, a right neighboring block, an upper right neighboring block, and the like. For example, a block 1 is the upper left neighboring block of the block 3 in the frame 16, a block 2 is the upper neighboring block of the block 3 in the frame 16, a block 4 is the left neighboring block of the block 3 in the frame 16, a block 9 is the upper right neighboring block of the block 3 in the frame 16, and a block 10 is the right neighboring block of the block 3 in the frame 16. In this case, the N neighboring blocks include at least two of the left neighboring block of the block 3, the upper neighboring block of the block 3, the upper left neighboring block, the right neighboring block, and the upper right neighboring block. For example, the N neighboring blocks include at least two neighboring blocks in the block 1, the block 2, the block 4, the block 9, and the block 10. For example, the N neighboring blocks may include the block 1 and the block 4. Alternatively, the N neighboring blocks may include the block 1, the block 9, the block 10, and the like.

In this way, the N neighboring blocks are determined from neighboring blocks such as the left neighboring block, the right neighboring block, the upper left neighboring block, and the upper right neighboring block of the current block in the current video frame, so that a range for determining the N neighboring blocks is expanded, and appropriateness of determining the N neighboring blocks is improved.

In a solution, the method further includes:
S121: In a case that N neighboring blocks of a current block in a current video frame have been coded, and a coding mode of each of the N neighboring blocks is different from forward predictive coding, determine a second quantity of neighboring blocks on which backward predictive coding is performed in the N neighboring blocks, N being a positive integer greater than or equal to 2.
S122: In a case that the second quantity is greater than 0, a backward predictive coding cost of the current block is determined by using a reference frame set, and the backward predictive coding cost of the current block is less than a preset target cost threshold corresponding to the second quantity, determine coding costs used for separately performing forward predictive coding on the current block by using all reference frames in the reference frame set, and determine a lowest coding cost in the determined coding costs used for performing forward predictive coding as a forward predictive coding cost of the current block, the backward predictive coding cost being a lowest coding cost in coding costs used for separately performing backward predictive coding on the current block by using all the reference frames in the reference frame set.
S123: Determine a coding mode of the current block based on a magnitude relationship between the backward predictive coding cost and the forward predictive coding cost.

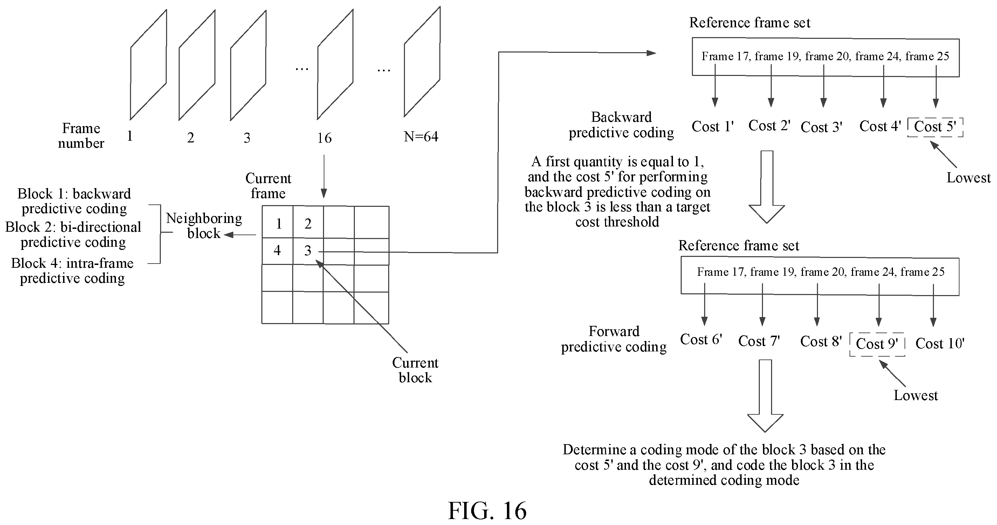

For a coder that adaptively chooses whether to first perform forward predictive coding or backward predictive coding or a coder that fixedly first performs backward predictive coding and then performs forward predictive coding, the coding mode of the current block may be instructed based on a neighboring block on which backward predictive coding is performed in the neighboring blocks of the current block. As shown in FIG. 16, a current video may include but is not limited to a plurality of video frames with frame numbers, for example, video frames whose frame numbers are 1 to 64. A current video frame may be but is not limited to a to-be-coded video frame in the current video. For example, the current video frame may be but is not limited to a video frame whose frame number is 16 (or referred to as a frame 16). A current block in the current video frame may be but is not limited to a to-be-coded block in the current video frame. For example, the current block is a block 3. Neighboring blocks of the block 3 may include, but are not limited to, a left neighboring block of the block 3, an upper neighboring block of the block 3, an upper left neighboring block, a right neighboring block, and an upper right neighboring block. For example, the neighboring blocks of the block 3 may include, but are not limited to, the block 1, the block 2, and the block 4. N neighboring blocks of the block 3 may include, but are not limited to, at least two neighboring blocks in the left neighboring block of the block 3, the upper neighboring block of the block 3, the upper left neighboring block, the right neighboring block, and the upper right neighboring block. For example, the N neighboring blocks of the block 3 may include, but are not limited to, the block 1, the block 2, and the block 4. The block 3 may be coded by using, but not limited to, the following operations:

Operation S1601: In a case that the block 1, the block 2, and the block 4 have been coded, and coding modes of the block 1, the block 2, and the block 4 are different from forward predictive coding, a second quantity of neighboring blocks on which backward predictive coding is performed in the block 1, the block 2, and the block 4 is determined. In this embodiment, a coding mode of the block 1 is backward predictive coding, a coding mode of the block 2 is bi-directional predictive coding, and a coding mode of the block 4 is intra-frame predictive coding. The second quantity is 1.

Operation S1602: In a case that the second quantity is greater than 0, a backward predictive coding cost of the block 3 is determined by using a reference frame set, and the backward predictive coding cost of the block 3 is less than a preset target cost threshold corresponding to the second quantity, determine coding costs used for separately performing forward predictive coding on the block 3 by using all reference frames in the reference frame set, and determine a lowest coding cost in the determined coding costs used for performing forward predictive coding as a forward predictive coding cost of the block 3, the backward predictive coding cost being a lowest coding cost in coding costs used for separately performing backward predictive coding on the block 3 by using all the reference frames in the reference frame set.

**In** this embodiment, the reference frame set may include but is not limited to a frame 17, a frame 19, a frame 20, a frame 24, and a frame 25. A coding cost used for performing backward predictive coding on the block 3 by using the frame 17 is a cost 1', a coding cost used for performing backward predictive coding on the block 3 by using the frame 19 is a cost 2', a coding cost used for performing backward predictive coding on the block 3 by using the frame 20 is a cost 3', a coding cost used for performing backward predictive coding on the block 3 by using the frame 24 is a cost 4', and a coding cost used for performing backward predictive coding on the block 3 by using the frame 25 is a cost 5'. The backward predictive coding cost is the lowest cost 5' in the cost 1', the cost 2', the cost 3', the cost 4', and the cost 5'.

In this embodiment, a coding cost used for performing forward predictive coding on the block 3 by using the frame 17 is a cost 6', a coding cost used for performing forward predictive coding on the block 3 by using the frame 19 is a cost 7', a coding cost used for performing forward predictive coding on the block 3 by using the frame 20 is a cost 8', a coding cost used for performing forward predictive coding on the block 3 by using the frame 24 is a cost 9', and a coding cost used for performing forward predictive coding on the block 3 by using the frame 25 is a cost 10'. The forward predictive coding cost is the lowest cost 9' in the cost 6', the cost 7', the cost 8', the cost 9', and the cost 10'.

Operation S1604: Determine a coding mode of the block 3 based on the cost 5' and the cost 9', and code the block 3 in the determined coding mode.

According to the foregoing operations, not only the coding mode of the current block can be instructed based on a neighboring block on which forward predictive coding is performed in the neighboring blocks of the current block, but also the coding mode of the current block can be instructed based on a neighboring block on which backward predictive coding is performed in the neighboring blocks of the current block, thereby improving flexibility of determining the coding mode of the current block.

To better understand the video coding method in the embodiments of this application, explanations and descriptions for the video coding method in the embodiments of this application are provided below with reference to exemplary embodiments, and may be, but are not limited to being, applicable to the embodiments of this application.

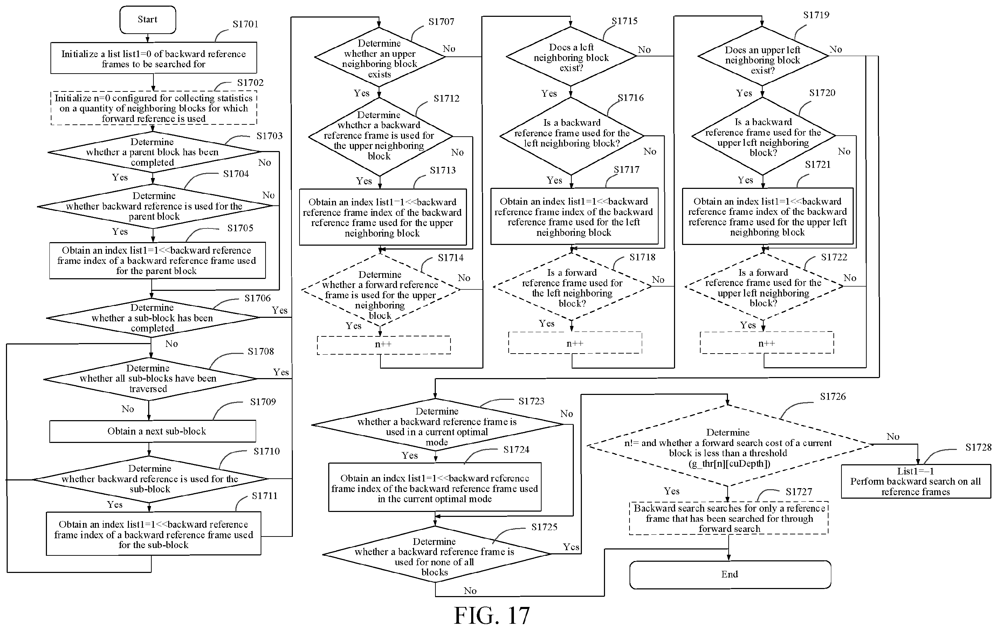

As shown in FIG. 17, core optimization for a related fast algorithm in this application is a trigger condition, generation of a threshold table, and how to select a reference frame after triggering. Optimization for the trigger condition and how to select a reference frame after triggering corresponds to content marked by dashed-line boxes in FIG. 17. A core idea thereof is as follows: When candidate reference frames for backward predictive coding are filtered, a status of using forward predictive coding for the left neighboring block (or referred to as a neighboring block located on the left of the current block in the current video frame), the upper neighboring block (or referred to as a neighboring block located above the current block in the current video frame), and the upper left neighboring block (or referred to as a neighboring block located on the upper left of the current block in the current video frame) of the current block. When the existing algorithm encounters a worst case, if it is found that forward predictive coding is used for a neighboring block, and the forward predictive coding cost of the current block is less than a corresponding cost threshold, a candidate reference frame that is the same as that used for forward predictive coding is used for backward predictive coding. The video coding method in this embodiment of this application may be implemented by using the following operations, but this is not limited.

Operation S1701: Initialize a list list1=0 of backward reference frames to be searched for.

Operation S1702: Initialize n=0 configured for collecting statistics on a quantity of neighboring blocks for which forward reference is used. Specifically, before a related fast algorithm is performed, the variable n=0 is initialized, to mark the quantity of neighboring blocks for which forward prediction is used.

Operation S1703: Determine whether a parent block has been completed, and perform operation S1704 when determining that the parent block has been completed.

Operation S1704: Determine whether backward reference is used for the parent block, and perform operation S1705 when determining that the backward reference is used for the parent block.

Operation S1705: Obtain an index list1=1<<backward reference frame index of a backward reference frame used for the parent block.

Operation S1706: Determine whether a sub-block has been completed, and perform operation S1707 when determining that the sub-block has been completed, or perform operation S1708 to operation S1711 when determining that the sub-block has not been completed.

Operation S1707: Determine whether an upper neighboring block exists, and perform operation S1712 to operation S1714 when determining that the upper neighboring block exists.

Operation S1708: Determine whether all sub-blocks have been traversed, and perform operation S1707 when determining that all the sub-blocks have been traversed, or perform operation S1709 when determining that not all the sub-blocks have been traversed.

Operation S1709: Obtain a next sub-block.

Operation S1710: Determine whether backward reference is used for the sub-block, and perform operation S1711 when determining that the backward reference is used for the sub-block.

Operation S1711: Obtain an index list1=1<<backward reference frame index of a backward reference frame used for the sub-block.

Operation S1712: Determine whether a backward reference frame is used for the upper neighboring block, and perform operation S1713 when determining that the backward reference frame is used for the upper neighboring block, or perform operation S1714 when determining that the backward reference frame is not used for the upper neighboring block.

Operation S1713: Obtain an index list1=1<<backward reference frame index of the backward reference frame used for the upper neighboring block.

Operation S1714: Determine whether a forward reference frame is used for the upper neighboring block, and n++ when determining that the forward reference frame is used for the upper neighboring block.

In this embodiment, only processing operations (for example, operation S1707 to operation S1714) for the neighboring block located above the current block (or referred to as the upper neighboring block) are explained and described. Actually, processing operations (for example, operation S1715 to operation S1718) for the neighboring block located on the left of the current block (or referred to as the left neighboring block) and processing operations (for example, operation S1719 to operation S1722) for the neighboring block located on the upper left of the current block (or referred to as the upper left neighboring block) are similar to the processing operations for the upper neighboring block. When the left neighboring block is processed, if the left neighboring block exists and forward predictive coding is used for the left neighboring block, n++. When the upper left neighboring block is processed, if the upper left neighboring block exists and forward predictive coding is used for the upper left neighboring block, n++. Details are not described herein again.

Operation S1723: Determine whether a backward reference frame is used in a current optimal mode, and perform operation S1724 when determining that the backward reference frame is used in the current optimal mode, or perform operation S1725 when determining that the backward reference frame is not used in the current optimal mode.

Operation S1724: Obtain an index list1=1<<backward reference frame index of the backward reference frame used in the current optimal mode.

Operation S1725: Determine whether a backward reference frame is used for none of all blocks, and perform operation S1726 when determining that the backward reference frame is used for none of all the blocks, or end the process when determining that the backward reference frame is used for a block in all the blocks.

Operation S1726: Determine n!= and whether a forward search cost of the current block is less than a threshold (g_thr[n][cuDepth]), and perform operation S1727 when determining that the forward search cost of the current block is less than the threshold, or perform operation S1728 when determining that the forward search cost of the current block is not less than the threshold.

Operation S1727: Backward search searches for only a reference frame that has been searched for through forward search.

Operation S1728: List1=-1 and perform backward search on all reference frames.

When a related fast algorithm encounters a worst case (to be specific, backward predictive coding is not used for any neighboring block, and all available reference frames need to be traversed), if forward predictive coding is used for a neighboring block (n!=0) and the forward predictive coding cost of the current block is less than a corresponding cost threshold g_thr[n][cuDepth], a candidate reference frame for forward prediction is used during backward prediction; otherwise, all reference frames are attempted for backward prediction. g_thr[n] [cuDepth] is an identifier of a cost threshold for the first quantity n and a block size corresponding to a cu depth of the current block. In g_thr[n][cuDepth], cuDepth represents the cu depth of the current block. CU sizes include: 64*64, 32*32, 16*16, and 8*8. A relationship between CU sizes and depths is as follows: A CU depth is 0, and a CU size is 64*64; a CU depth is 1, and a CU size is 32*32; a CU depth is 2, and a CU size is 16*16; and a CU depth is 3, and a CU size is 8*8.

According to the video coding method in this embodiment of this application, a backward predictive coding process is accelerated by reducing a quantity of reference frames attempted for backward prediction. As shown in Table 1, an optimization effect is described based on an indicator of an algorithm. Before and after the algorithm is optimized, a sequence is coded, a quantity of reference frames attempted for backward prediction is reduced from 4162260 to 3463050, a probability that the algorithm fails (the algorithm encounters a worst case, and all reference frames are attempted) decreases from 54.21% to 36.05%, and a probability that there is no gain (all backward reference frames are attempted but a forward reference frame is selected) when the algorithm fails decreases from 87.27% to 83.65%.

**Table 1**

| | Quantity of reference frames attempted for backward prediction | Algorithm failure probability | Probability of selecting forward when the algorithm fails |
|---|---|---|---|
| Before optimization | 4162260 | 54.21% | 87.27% |
| After optimization | 3463050 | 36.05% | 83.65% |

According to the video coding method in this embodiment of this application, performance of the algorithm is greatly improved. As shown in Table 2, the performance of the algorithm is described based on an acceleration effect of an entire 265 low-latency coder. After optimization, an overall speedup of the coder is 3.45%, a PSNR BDrate loss is 0.30%, and a speedup ratio is 11.68.

**Table 2**

| | | | | BD-RATE | | | | Speedup ratio |
|---|---|---|---|---|---|---|---|---|
| Class | Speed | Speed (SSIM) | RefSpeed | psnr | psnr_mse | ssim | vmaf | psnr |
| 1280x720_w.. | 2.02% | 2.10% | 2.21% | 0.19% | 0.14% | 0.25% | 0.02% | 10.55 |
| 1280x720_ot. | 6.82% | 6.27% | 6.76% | 0.77% | 0.76% | 0.92% | 0.61% | 8.89 |
| 1920x1080_. | 2.40% | 2.57% | 2.53% | 0.32% | 0.30% | 0.40% | 0.31% | 7.44 |
| 1920x1080 | 4.30% | 4.34% | 2.3370 | 0.32% | 0.30% | 0.10% | 0.50% | 13.58 |
| 2560x1440_. | 2.83% | 3.09% | 4.43% | 0.11% | -0.10% | 0.10% | 0.20% | -24.81 |
| 2560x1440_.. | 4.01% | 3.96% | 2.81% | 0.17% | 0.17% | 0.23% | 0.16% | 23.57 |
| AVERAGE | 3.45% | 3.48% | 4.08% | 0.30% | 0.28% | 0.31% | 0.28% | 11.68 |

For brief description, the foregoing method embodiments are expressed as a series of action combinations. However, a person skilled in the art is to appreciate that this application is not limited to the described order of the actions, because according to this application, some operations may be performed in another order or simultaneously. In addition, a person skilled in the art is also to appreciate that all embodiments described in the specification are exemplary embodiments, and the related actions and modules are not necessarily mandatory to this application.

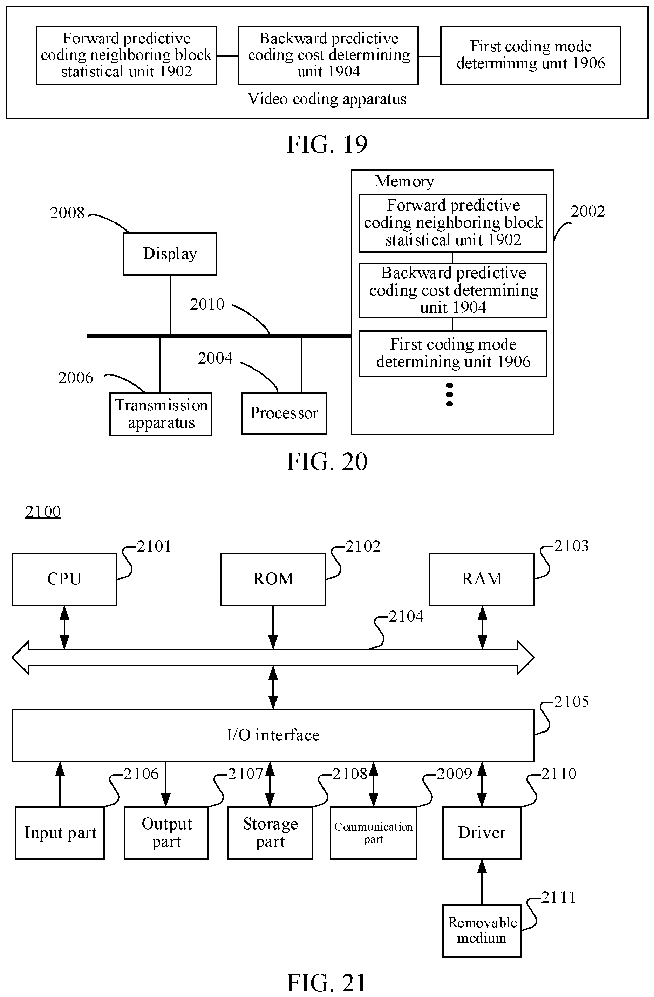

According to another aspect of the embodiments of this application, a video coding apparatus for implementing the foregoing descriptions is further provided. As shown in FIG. 19, the apparatus includes:
a forward predictive coding neighboring block statistical unit 1902, configured to: when N neighboring blocks of a current block in a current video frame have been coded, and a coding mode of each of the N neighboring blocks is different from backward predictive coding, collect statistics on a first quantity of neighboring blocks on which forward predictive coding is performed in the N neighboring blocks, N being a positive integer greater than or equal to 2;
a backward predictive coding cost determining unit 1904, configured to: when the first quantity is greater than 0, a forward predictive coding cost of the current block is determined by using a reference frame set, and the forward predictive coding cost of the current block is less than a preset target cost threshold corresponding to the first quantity, determine coding costs used for separately performing backward predictive coding on the current block by using all reference frames in the reference frame set, and determine a lowest coding cost in the determined coding costs used for performing backward predictive coding as a backward predictive coding cost of the current block, the forward predictive coding cost being a lowest coding cost in coding costs used for separately performing forward predictive coding on the current block by using all the reference frames in the reference frame set; and
a first coding mode determining unit 1906, configured to determine a coding mode of the current block based on a magnitude relationship between the forward predictive coding cost and the backward predictive coding cost.

In this embodiment provided in this application, when a plurality of coded neighboring blocks exist in neighboring blocks of the current block, and a coding mode of each neighboring block is different from the backward predictive coding, if a neighboring block on which forward predictive coding has been performed exists in the plurality of coded neighboring blocks of the current block, and the forward predictive coding cost of the current block is less than a cost threshold corresponding to a quantity of neighboring blocks on which forward predictive coding has been performed in the plurality of coded neighboring blocks, the reference frame set used for determining the forward predictive coding cost of the current block is used as a reference frame set for performing backward predictive coding on the current block. In this way, it is avoided that all available reference frames need to be searched for when backward predictive coding is performed on the current block. For example, backward reference frames used for a parent block, a sub-block, a left neighboring block, an upper neighboring block, an upper left neighboring block, and a current optimal mode (for example, merge coding or skip coding) are used as candidate reference frames for backward predictive coding of the current block, thereby reducing time required for determining the reference frame set for performing backward predictive coding on the current block.

In addition, the lowest coding cost in the coding costs used for performing backward predictive coding on the current block by using all the reference frames in the reference frame set may be directly determined as the backward predictive coding cost of the current block, thereby reducing time required for determining the backward predictive coding cost of the current block, and improving efficiency of determining the backward predictive coding cost of the current block.

Further, the coding mode of the current block may be directly determined based on the forward predictive coding cost and the backward predictive coding cost of the current block, avoiding that the coding mode of the current block is determined by traversing various predictive coding modes. For example, forward predictive coding is first attempted, then backward predictive coding is attempted, and after all predictive coding modes are attempted, a mode with a lowest coding cost is selected as a final predictive coding mode of the current block.

Time required for determining the coding mode of the current block is reduced, and efficiency of determining the coding mode of the current block is improved, thereby achieving a technical effect of improving video coding efficiency, and further resolving a technical problem of low video coding efficiency.

In a solution, the apparatus further includes:
a target cost threshold determining unit, configured to: before the coding costs used for separately performing backward predictive coding on the current block by using all the reference frames in the reference frame set are determined, determine the target cost threshold corresponding to the first quantity and a size of the current block from a preset cost threshold set, each cost threshold in the cost threshold set corresponding to one quantity in a quantity set and one size in a size set, the quantity set including N positive integers from 1 to N, the first quantity being a quantity in the quantity set, the size set including sizes of different blocks allowed to be coded in the current video frame, and the size of the current block being a size in the size set.

In a solution, the apparatus further includes:
a processing unit, configured to: before the target cost threshold corresponding to the first quantity and the size of the current block is determined from the preset cost threshold set, code a group of video frames in a sample video, and obtain coding information generated by coding the group of video frames, the coding information including an accumulated coding cost set and a count set, each accumulated coding cost in the accumulated coding cost set corresponding to one quantity in the quantity set and one size in the size set, each count in the count set corresponding to one accumulated coding cost in the accumulated coding cost set, an (i, j)^{th} accumulated coding cost in the accumulated coding cost set corresponding to an i^{th} quantity in the quantity set and a j^{th} size in the size set and corresponding to an (i, j)^{th} count in the count set, the (i, j)^{th} count indicating a count of a target coding event occurring in a process of coding the group of video frames, both i and j being positive integers greater than or equal to 1, and the target coding event meaning that forward predictive coding is performed on a block in the group of video frames when N neighboring blocks of the block have been coded, a coding mode of each of the N neighboring blocks of the block is different from the backward predictive coding, a size of the block is the j^{th} size, and a quantity of neighboring blocks on which forward predictive coding is performed in the N neighboring blocks of the block is the i^{th} quantity; and the (i, j)^{th} accumulated coding cost being a sum of forward predictive coding costs of the block in the target coding event that occurs for the (i, j)^{th} count; and
a cost threshold set determining unit, configured to determine the cost threshold set based on the coding information.

In a solution, the cost threshold set determining unit is configured to:
determine an (i, j)^{th} cost threshold in the cost threshold set through the following operation, the (i, j)^{th} cost threshold corresponding to the i^{th} quantity in the quantity set and the j^{th} size in the size set:
determining the (i, j)^{th} cost threshold to be equal to a value obtained by dividing the (i, j)^{th} accumulated coding cost by the (i, j)^{th} count.

In a solution, the apparatus further includes:
an obtaining unit, configured to: in a process of coding the group of video frames in the sample video, obtain a forward predictive coding cost and a backward predictive coding cost of a k^{th} block in the group of video frames when N neighboring blocks of the k^{th} block have been coded, a coding mode of each of the N neighboring blocks of the k^{th} block is different from the backward predictive coding, a size of the k^{th} block is the j^{th} size, and a quantity of neighboring blocks on which forward predictive coding is performed in the N neighboring blocks of the k^{th} block is the i^{th} quantity, k being a positive integer greater than or equal to 1; and
an accumulation unit, configured to add the forward predictive coding cost of the k^{th} block to the (i, j)^{th} accumulated coding cost and increase the (i, j)^{th} count by 1 when determining, based on the forward predictive coding cost and the backward predictive coding cost of the k^{th} block, that a coding mode of the k^{th} block is the forward predictive coding.

In a solution, the apparatus further includes: a coding module, configured to: before the first quantity of neighboring blocks on which forward predictive coding is performed in the N neighboring blocks is determined, code each of the N neighboring blocks, a coding mode of each of the N neighboring blocks being one of the forward predictive coding and the backward predictive coding, or one of the forward predictive coding, the backward predictive coding, and bi-directional predictive coding, or one of the forward predictive coding, the backward predictive coding, the bi-directional predictive coding, and intra-frame predictive coding.

In a solution, the apparatus further includes:
a reference frame set determining unit, configured to: before the coding costs used for separately performing backward predictive coding on the current block by using all the reference frames in the reference frame set are determined, determine a portion of M reference frames as the reference frame set when reference frames allowed to be used for performing forward predictive coding on the current block are the M reference frames, M being a positive integer greater than or equal to 2.

In a solution, the reference frame set determining unit is further configured to determine the portion of the M reference frames as the reference frame set when the current video frame is a real-time transmitted video frame and the reference frames allowed to be used for performing forward predictive coding on the current block are the M reference frames.

In a solution, the apparatus further includes:
a first reference frame determining unit, configured to determine M coded video frames as the M reference frames before the portion of the M reference frames is determined as the reference frame set, frame numbers of the M video frames being less than a frame number of the current video frame; or
a second reference frame determining unit, configured to determine P coded video frames and Q coded video frames as the M reference frames, M being equal to a sum of P and Q, frame numbers of the P video frames being less than a frame number of the current video frame, frame numbers of the Q video frames being greater than the frame number of the current video frame, and P and Q being positive integers greater than or equal to 1.

In a solution, the first coding mode determining unit is further configured to determine the coding mode of the current block as the forward predictive coding when the forward predictive coding cost is less than the backward predictive coding cost; or determine the coding mode of the current block as the backward predictive coding when the forward predictive coding cost is greater than the backward predictive coding cost; or
the first coding mode determining unit is further configured to determine the coding mode of the current block as the forward predictive coding when the forward predictive coding cost is less than the backward predictive coding cost and a bi-directional predictive coding cost of the current block, the bi-directional predictive coding cost being a lowest coding cost in coding costs used for separately performing bi-directional predictive coding on the current block by using all the reference frames in the reference frame set; determine the coding mode of the current block as the backward predictive coding when the backward predictive coding cost is less than the forward predictive coding cost and the bi-directional predictive coding cost; or determine the coding mode of the current block as the bi-directional predictive coding when the bi-directional predictive coding cost is less than the forward predictive coding cost and the backward predictive coding cost.

In a solution, the apparatus further includes:
a coding module, configured to: after the coding mode of the current block is determined based on the magnitude relationship between the forward predictive coding cost and the backward predictive coding cost, perform forward predictive coding on the current block when the coding mode of the current block is determined as the forward predictive coding; or
a coding module, configured to perform backward predictive coding on the current block when the coding mode of the current block is determined as the backward predictive coding; or
a coding module, configured to perform bi-directional predictive coding on the current block when the coding mode of the current block is determined as the bi-directional predictive coding.

In a solution, the N neighboring blocks include at least two of the following: a left neighboring block of the current block in the current video frame, an upper neighboring block of the current block in the current video frame, an upper left neighboring block of the current block in the current video frame, a right neighboring block of the current block in the current video frame, or an upper right neighboring block of the current block in the current video frame.

According to another aspect of the embodiments of this application, another video coding apparatus for implementing the foregoing descriptions is further provided, the apparatus including:
a backward predictive coding neighboring block statistical unit, configured to: when N neighboring blocks of a current block in a current video frame have been coded, and a coding mode of each of the N neighboring blocks is different from forward predictive coding, determine a second quantity of neighboring blocks on which backward predictive coding is performed in the N neighboring blocks, N being a positive integer greater than or equal to 2;
a forward predictive coding cost determining unit, configured to: when the second quantity is greater than 0, a backward predictive coding cost of the current block is determined by using a reference frame set, and the backward predictive coding cost of the current block is less than a preset target cost threshold corresponding to the second quantity, determine coding costs used for separately performing forward predictive coding on the current block by using all reference frames in the reference frame set, and determine a lowest coding cost in the determined coding costs used for performing forward predictive coding as a forward predictive coding cost of the current block, the backward predictive coding cost being a lowest coding cost in coding costs used for separately performing backward predictive coding on the current block by using all the reference frames in the reference frame set; and
a second coding mode determining unit, configured to determine a coding mode of the current block based on a magnitude relationship between the backward predictive coding cost and the forward predictive coding cost.

According to still another aspect of the embodiments of the present disclosure, an electronic device configured to implement the foregoing video coding method is further provided. The electronic device may be the terminal device or the server shown in FIG. 1. In this embodiment, an example in which the electronic device is a server is used for description. As shown in FIG. 20, the electronic device includes a memory 2002 and a processor 2004. The memory 2002 has a computer program stored therein, and the processor 2004 is configured to perform operations in any one of the foregoing method embodiments through the computer program.

In this embodiment, the electronic device may be located in at least one of a plurality of network devices of a computer network.

In this embodiment, the foregoing processor may be configured to use the computer program to perform the following operations:
S1: when N neighboring blocks of a current block in a current video frame have been coded, and a coding mode of each of the N neighboring blocks is different from backward predictive coding, collecting statistics on a first quantity of neighboring blocks on which forward predictive coding is performed in the N neighboring blocks, N being a positive integer greater than or equal to 2;
S2: when the first quantity is greater than 0, a forward predictive coding cost of the current block is determined by using a reference frame set, and the forward predictive coding cost of the current block is less than a preset target cost threshold corresponding to the first quantity, determining coding costs used for separately performing backward predictive coding on the current block by using all reference frames in the reference frame set, and determining a lowest coding cost in the determined coding costs used for performing backward predictive coding as a backward predictive coding cost of the current block, the forward predictive coding cost being a lowest coding cost in coding costs used for separately performing forward predictive coding on the current block by using all the reference frames in the reference frame set; and
S3: determining a coding mode of the current block based on a magnitude relationship between the forward predictive coding cost and the backward predictive coding cost.

In some embodiments, a person of ordinary skill in the art may understand that the structure shown in FIG. 20 is merely an example, and the electronic device may alternatively be a terminal device such as a smartphone (such as an Android phone or an iOS phone), a tablet computer, a palmtop computer, a mobile internet device (MID), or a PAD. FIG. 20 does not limit the structure of the foregoing electronic device. For example, the electronic device may further include more or fewer components (such as a network interface) than those shown in FIG. 20, or have a different configuration from the configuration shown in FIG. 20.

The memory 2002 may be configured to store a software program and a module, such as program instructions/modules corresponding to the video coding method and apparatus in the embodiments of the present disclosure. The processor 2004 executes various functional applications and data processing by running the software program and the module stored in the memory 2002, that is, implements the foregoing video coding method. The memory 2002 may include a high-speed random access memory, and may further include a nonvolatile memory, such as one or more magnetic disk storage apparatus, a flash memory, or another nonvolatile solid-state memory. In some examples, the memory 2002 may further include memories remotely disposed relative to the processor 2004, and these remote memories may be connected to the terminal through a network. Examples of the foregoing network include, but are not limited to, an internet, an intranet, a local area network, a mobile communication network, and a combination thereof. The memory 2002 may be specifically, but is not limited to being, configured to store information such as a sample feature of an item and a target virtual resource account. In an example, as shown in FIG. 20, the memory 2002 may include, but is not limited to, the forward predictive coding neighboring block statistical unit 1902, the backward predictive coding cost determining unit 1904, and the first coding mode determining unit 1906 in the foregoing video coding apparatus. In addition, the memory may further include, but is not limited to, other modules and units in the foregoing video coding apparatus. Details are not described again in this example.

In some embodiments, a transmission apparatus 2006 is configured to receive or transmit data through a network. Specific examples of the foregoing network may include a wired network and a wireless network. In an example, the transmission apparatus 2006 includes a network interface controller (NIC). The network interface controller may be connected to another network device and a router through a network cable, to communicate with the internet or a local area network. In an example, the transmission apparatus 2006 is a radio frequency (RF) module, and is configured to communicate with the internet in a wireless manner.

In addition, the electronic device further includes: a display 2008, configured to display order information to be processed; and a connection bus 2010, configured to connect various module components in the electronic device.

In another embodiment, the terminal device or the server may be a node in a distributed system. The distributed system may be a blockchain system, and the blockchain system may be a distributed system formed by connecting a plurality of nodes in a form of network communication. A peer-to-peer network may be formed between the nodes. Any form of computing device, for example, an electronic device such as the server or the terminal, may join the peer-to-peer network to become a node in the blockchain system.

According to an aspect of this application, a computer program product is provided, the computer program product including a computer program/instructions, and the computer program/instructions including program code configured for performing the method shown in the flowchart. In this embodiment, the computer program may be downloaded and installed from the network through a communication part 2109, and/or installed from a removable medium 2111. When the computer program is executed by a central processing unit 2101, various functions provided in the embodiments of this application are executed. The sequence numbers of the embodiments of the present disclosure are merely for the description purpose but do not imply the preference among the embodiments.

FIG. 21 is a structural block diagram of a computer system of an electronic device for implementing an embodiment of this application. The computer system 2100 of the electronic device shown in FIG. 21 is merely an example, and does not constitute any limitation on functions and use ranges of the embodiments of this application. As shown in FIG. 21, the computer system 2100 includes a central processing unit (CPU) 2101, which may perform various suitable actions and processing based on a program stored in a read-only memory (ROM) 2102 or a program loaded to a random access memory (RAM) 2103 from a storage part 2108. The random access memory 2103 further stores various programs and data required by system operations. The central processing unit 2101, the read-only memory 2102, and the random access memory 2103 are connected to each other through a bus 2104. An input/output interface (I/O interface) 2105 is also connected to the bus 2104.

The following components are connected to the input/output interface 2105: an input part 2106 including a keyboard, a mouse, and the like; an output part 2107 including a cathode ray tube (CRT), a liquid crystal display (LCD), a speaker, and the like; the storage part 2108 including a hard disk and the like; and the communication part 2109 including a network interface card such as a local area network card or a modem. The communication part 2109 performs communication processing by using a network such as the Internet. A driver 2110 is also connected to the input/output interface 2105 according to a requirement. The removable medium 2111, such as a magnetic disk, an optical disc, a magneto-optical disk, or a semiconductor memory, is installed on the drive 2110 according to a requirement, so that a computer program read from the removable medium is installed into the storage part 2108 according to a requirement.

Particularly, based on the embodiments of this application, a process described in each method flowchart may be implemented as a computer software program. For example, this embodiment of this application includes a computer program product, which includes a computer program carried on a computer-readable medium, and the computer program includes program code configured for performing the method shown in the flowchart. In this embodiment, the computer program may be downloaded and installed from the network through the communication part 2109, and/or installed from the removable medium 2111. When the computer program is executed by the central processing unit 2101, various functions limited in a system of this application are executed.

According to an aspect of this application, a computer-readable storage medium is provided. A processor of an electronic device reads computer instructions from the computer-readable storage medium, and executes the computer instructions, so that the electronic device performs the method provided in various exemplary implementations in the foregoing embodiments.

In this embodiment, the computer-readable storage medium may be configured to store a computer program configured for performing the following operations:
S1: when N neighboring blocks of a current block in a current video frame have been coded, and a coding mode of each of the N neighboring blocks is different from backward predictive coding, collecting statistics on a first quantity of neighboring blocks on which forward predictive coding is performed in the N neighboring blocks, N being a positive integer greater than or equal to 2;
S2: when the first quantity is greater than 0, a forward predictive coding cost of the current block is determined by using a reference frame set, and the forward predictive coding cost of the current block is less than a preset target cost threshold corresponding to the first quantity, determining coding costs used for separately performing backward predictive coding on the current block by using all reference frames in the reference frame set, and determining a lowest coding cost in the determined coding costs used for performing backward predictive coding as a backward predictive coding cost of the current block, the forward predictive coding cost being a lowest coding cost in coding costs used for separately performing forward predictive coding on the current block by using all the reference frames in the reference frame set; and
S3: determining a coding mode of the current block based on a magnitude relationship between the forward predictive coding cost and the backward predictive coding cost.

In this embodiment, a person of ordinary skill in the art may understand that all or some of the operations in various methods in the foregoing embodiments may be completed by a program instructing relevant hardware of a terminal device. The program may be stored in a computer-readable storage medium. The storage medium may include a flash disk, a read-only memory (ROM), a random access memory (RAM), a magnetic disk, an optical disc, or the like.

When the integrated unit in the foregoing embodiment is implemented in the form of a software functional unit and sold or used as an independent product, the integrated unit may be stored in the foregoing computer-readable storage medium. Based on such an understanding, the technical solutions of the present disclosure essentially, or the part contributing to the related art, or all or some of the technical solutions may be presented in the form of a software product. The computer software product is stored in a storage medium, and includes several instructions for instructing one or more electronic devices (which may be a personal computer, a server, a network device, or the like) to perform all or some of the operations of the methods described in the embodiments of the present disclosure.

In the foregoing embodiments of the present disclosure, the descriptions of the embodiments have different focuses. For a part that is not detailed in an embodiment, reference may be made to the relevant description of other embodiments.

In several embodiments provided in this application, a disclosed client may be implemented in other manners. The described apparatus embodiments are merely examples. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented by some interfaces, and indirect couplings or communication connections between units or modules may be electric or in other forms.

The units described as separate parts may or may not be physically separate, and parts displayed as units may or may not be physical units, may be located in one place, or may be distributed on a plurality of network units. Some or all of the units may be selected according to an actual requirement to achieve the objectives of the solutions in the embodiments.

In addition, functional units in the embodiments of the present disclosure may be integrated into one processing unit, or each of the units may exist alone physically, or two or more units may be integrated into one unit. The integrated unit may be implemented in the form of hardware, or may be implemented in the form of a software functional unit.

Technical features of the foregoing embodiments may be combined in different manners to form other embodiments. To make description concise, not all possible combinations of the technical features in the foregoing embodiments are described. However, the combinations of these technical features shall be considered as falling within the scope set forth in this specification provided that no conflict exists.

The foregoing embodiments only describe several implementations of this application, and their descriptions are specific and detailed, but cannot therefore be construed as a limitation to the patent scope of the present disclosure. A person of ordinary skill in the art may further make variations and improvements without departing from the concept of this application, and the variations and improvements fall within the protection scope of this application. Therefore, the patent protection scope of this application shall be subject to the appended claims.

## Claims

1. A video coding method, executable by an electronic device, and comprising:
when N neighboring blocks of a current block in a current video frame have been coded, and a coding mode of each of the N neighboring blocks is different from backward predictive coding, determining a first quantity of neighboring blocks on which forward predictive coding is performed in the N neighboring blocks, N being a positive integer greater than or equal to 2;
when the first quantity is greater than 0, and a forward predictive coding cost of the current block determined by using a reference frame set is less than a preset cost threshold corresponding to the first quantity, determining coding costs used for separately performing backward predictive coding on the current block by using respective reference frames in the reference frame set, and determining a lowest coding cost in the determined coding costs as a backward predictive coding cost of the current block, the forward predictive coding cost being a lowest coding cost in coding costs used for separately performing forward predictive coding on the current block by using respective the reference frames in the reference frame set; and
determining a coding mode of the current block based on a magnitude relationship between the forward predictive coding cost and the backward predictive coding cost.

2. The method according to claim 1, wherein the method further comprises:
determining the cost threshold corresponding to the first quantity and a size of the current block from a preset cost threshold set, each cost threshold in the cost threshold set corresponding to one quantity in a quantity set and one size in a size set, the quantity set comprising N positive integers from 1 to N, the first quantity being a quantity in the quantity set, the size set comprising sizes of different blocks allowed to be coded in the current video frame, and the size of the current block being a size in the size set.

3. The method according to claim 2, wherein before the determining the cost threshold corresponding to the first quantity and a size of the current block from a preset cost threshold set, the method further comprises:
coding a group of video frames in a sample video, and obtaining coding information generated by coding the group of video frames, the coding information comprising an accumulated coding cost set and a count set, each accumulated coding cost in the accumulated coding cost set corresponding to one quantity in the quantity set and one size in the size set, each count in the count set corresponding to one accumulated coding cost in the accumulated coding cost set, an (i, j)^{th} accumulated coding cost in the accumulated coding cost set corresponding to an i^{th} quantity in the quantity set and a j^{th} size in the size set and corresponding to an (i, j)^{th} count in the count set, the (i, j)^{th} count indicating a count of a target coding event occurring in a process of coding the group of video frames, both i and j being positive integers greater than or equal to 1, and the target coding event meaning that forward predictive coding is performed on a block in the group of video frames when N neighboring blocks of the block have been coded, a coding mode of each of the N neighboring blocks of the block is different from the backward predictive coding, a size of the block is the j^{th} size, and a quantity of neighboring blocks on which forward predictive coding is performed in the N neighboring blocks of the block is the i^{th} quantity; and the (i, j)^{th} accumulated coding cost being a sum of forward predictive coding costs of the block in the target coding event that occurs for the (i, j)^{th} count; and
determining the cost threshold set based on the coding information.

4. The method according to claim 3, wherein the determining the cost threshold set based on the coding information comprises:
determining an (i, j)^{th} cost threshold in the cost threshold set through the following operation, the (i, j)^{th} cost threshold corresponding to the i^{th} quantity in the quantity set and the j^{th} size in the size set:
determining the (i, j)^{th} cost threshold to be equal to a value obtained by dividing the (i, j)^{th} accumulated coding cost by the (i, j)^{th} count.

5. The method according to claim 3 or 4, wherein during the coding a group of video frames in a sample video, the method further comprises:
obtaining a forward predictive coding cost and a backward predictive coding cost of a k^{th} block in the group of video frames when N neighboring blocks of the k^{th} block have been coded, a coding mode of each of the N neighboring blocks of the k^{th} block is different from the backward predictive coding, and a quantity of neighboring blocks on which forward predictive coding is performed in the N neighboring blocks of the k^{th} block is the i^{th} quantity, wherein a size of the k^{th} block is the j^{th} size, k being a positive integer greater than or equal to 1; and
adding the forward predictive coding cost of the k^{th} block to the (i, j)^{th} accumulated coding cost and increasing the (i, j)^{th} count by 1 when determining, based on the forward predictive coding cost and the backward predictive coding cost of the k^{th} block, that a coding mode of the k^{th} block is the forward predictive coding.

6. The method according to any one of claims 1 to 5, wherein the method further comprises:
coding each of the N neighboring blocks, a coding mode of each of the N neighboring blocks being one of the forward predictive coding and the backward predictive coding, or one of the forward predictive coding, the backward predictive coding, and bi-directional predictive coding, or one of the forward predictive coding, the backward predictive coding, the bi-directional predictive coding, and intra-frame predictive coding.

7. The method according to any one of claims 1 to 6, wherein the method further comprises:
determining a portion of M reference frames as the reference frame set when reference frames allowed to be used for performing forward predictive coding on the current block are the M reference frames, M being a positive integer greater than or equal to 2.

8. The method according to claim 7, wherein the determining a portion of M reference frames as the reference frame set when reference frames allowed to be used for performing forward predictive coding on the current block are the M reference frames comprises:
determining the portion of the M reference frames as the reference frame set when the current video frame is a real-time transmitted video frame and the reference frames allowed to be used for performing forward predictive coding on the current block are the M reference frames.

9. The method according to claim 7 or 8, wherein the method further comprises:
determining M coded video frames as the M reference frames, frame numbers of the M video frames being less than a frame number of the current video frame.

10. The method according to claim 7 or 8, wherein the method further comprises:
determining P coded video frames and Q coded video frames as the M reference frames, M being equal to a sum of P and Q, frame numbers of the P video frames being less than a frame number of the current video frame, frame numbers of the Q video frames being greater than the frame number of the current video frame, and P and Q being positive integers greater than or equal to 1.

11. The method according to any one of claims 1 to 10, wherein the determining a coding mode of the current block based on a magnitude relationship between the forward predictive coding cost and the backward predictive coding cost comprises:
determining the coding mode of the current block as the forward predictive coding when the forward predictive coding cost is less than the backward predictive coding cost.

12. The method according to any one of claims 1 to 11, wherein the determining a coding mode of the current block based on a magnitude relationship between the forward predictive coding cost and the backward predictive coding cost comprises:
determining the coding mode of the current block as the backward predictive coding when the forward predictive coding cost is greater than the backward predictive coding cost.

13. The method according to any one of claims 1 to 12, wherein the determining a coding mode of the current block based on a magnitude relationship between the forward predictive coding cost and the backward predictive coding cost comprises:
determining the coding mode of the current block as the forward predictive coding when the forward predictive coding cost is less than the backward predictive coding cost and a bi-directional predictive coding cost of the current block, the bi-directional predictive coding cost being a lowest coding cost in coding costs used for separately performing bi-directional predictive coding on the current block by using respective the reference frames in the reference frame set.

14. The method according to any one of claims 1 to 13, wherein the determining a coding mode of the current block based on a magnitude relationship between the forward predictive coding cost and the backward predictive coding cost comprises:
determining the coding mode of the current block as the backward predictive coding when the backward predictive coding cost is less than the forward predictive coding cost and a bi-directional predictive coding cost of the current block, the bi-directional predictive coding cost being a lowest coding cost in coding costs used for separately performing bi-directional predictive coding on the current block by using all the reference frames in the reference frame set.

15. The method according to any one of claims 1 to 14, wherein the determining a coding mode of the current block based on a magnitude relationship between the forward predictive coding cost and the backward predictive coding cost comprises:
determining the coding mode of the current block as the bi-directional predictive coding when a bi-directional predictive coding cost of the current block is less than the forward predictive coding cost and the backward predictive coding cost, the bi-directional predictive coding cost being a lowest coding cost in coding costs used for separately performing bi-directional predictive coding on the current block by using all the reference frames in the reference frame set.

16. The method according to any one of claims 1 to 15, wherein the method further comprises:
performing forward predictive coding on the current block when the coding mode of the current block is determined as the forward predictive coding.

17. The method according to any one of claims 1 to 15, wherein the method further comprises:
performing backward predictive coding on the current block when the coding mode of the current block is determined as the backward predictive coding.

18. The method according to any one of claims 1 to 15, wherein the method further comprises:
performing bi-directional predictive coding on the current block when the coding mode of the current block is determined as the bi-directional predictive coding.

19. The method according to any one of claims 1 to 18, wherein the N neighboring blocks comprise at least two of the following: a left neighboring block of the current block in the current video frame, an upper neighboring block of the current block in the current video frame, an upper left neighboring block of the current block in the current video frame, a right neighboring block of the current block in the current video frame, or an upper right neighboring block of the current block in the current video frame.

20. A video coding method, executable by an electronic device, and comprising:
when N neighboring blocks of a current block in a current video frame have been coded, and a coding mode of each of the N neighboring blocks is different from forward predictive coding, determining a second quantity of neighboring blocks on which backward predictive coding is performed in the N neighboring blocks, N being a positive integer greater than or equal to 2;
when the second quantity is greater than 0, and a backward predictive coding cost of the current block determined by using a reference frame set is less than a preset cost threshold corresponding to the second quantity, determining coding costs used for separately performing forward predictive coding on the current block by using respective reference frames in the reference frame set, and determining a lowest coding cost in the determined coding costs as a forward predictive coding cost of the current block, the backward predictive coding cost being a lowest coding cost in coding costs used for separately performing backward predictive coding on the current block by using respective the reference frames in the reference frame set; and
determining a coding mode of the current block based on a magnitude relationship between the backward predictive coding cost and the forward predictive coding cost.

21. A video coding apparatus, comprising:
a forward predictive coding neighboring block statistical unit, configured to: when N neighboring blocks of a current block in a current video frame have been coded, and a coding mode of each of the N neighboring blocks is different from backward predictive coding, determine a first quantity of neighboring blocks on which forward predictive coding is performed in the N neighboring blocks, N being a positive integer greater than or equal to 2;
a backward predictive coding cost determining unit, configured to: when the first quantity is greater than 0, and a forward predictive coding cost of the current block determined by using a reference frame set is less than a preset cost threshold corresponding to the first quantity, determine coding costs used for separately performing backward predictive coding on the current block by using respective reference frames in the reference frame set, and determine a lowest coding cost in the determined coding costs as a backward predictive coding cost of the current block, the forward predictive coding cost being a lowest coding cost in coding costs used for separately performing forward predictive coding on the current block by using respective the reference frames in the reference frame set; and
a first coding mode determining unit, configured to determine a coding mode of the current block based on a magnitude relationship between the forward predictive coding cost and the backward predictive coding cost.

22. A video coding apparatus, the apparatus comprising:
a backward predictive coding neighboring block statistical unit, configured to: when N neighboring blocks of a current block in a current video frame have been coded, and a coding mode of each of the N neighboring blocks is different from forward predictive coding, determine a second quantity of neighboring blocks on which backward predictive coding is performed in the N neighboring blocks, N being a positive integer greater than or equal to 2;
a forward predictive coding cost determining unit, configured to: when the second quantity is greater than 0, and a backward predictive coding cost of the current block determined by using a reference frame set is less than a preset cost threshold corresponding to the second quantity, determine coding costs used for separately performing forward predictive coding on the current block by using respective reference frames in the reference frame set, and determine a lowest coding cost in the determined coding costs as a forward predictive coding cost of the current block, the backward predictive coding cost being a lowest coding cost in coding costs used for separately performing backward predictive coding on the current block by using respective the reference frames in the reference frame set; and
a second coding mode determining unit, configured to determine a coding mode of the current block based on a magnitude relationship between the backward predictive coding cost and the forward predictive coding cost.

23. A computer-readable storage medium, comprising a stored program, the program, when run, performing the method according to any one of claims 1 to 20.

24. A computer program product, comprising a computer program/instructions, the computer program/instructions, when executed by a processor, implementing the operations of the method according to any one of claims 1 to 20.

25. An electronic device, comprising a memory and a processor, the memory having a computer program stored therein, and the processor being configured to perform the method according to any one of claims 1 to 20 through the computer program.
